# FASCICULE DE BREVET EUROPEEN

(11) **EP 3 595 217 B1**
(45) Date de publication et mention de la délivrance du brevet: **27.12.2023**
(21) Numéro de dépôt: 19185042.9
(22) Date de dépôt: 08.07.2019
(51) Int. Cl.: H04L 1/16

(54) **ACQUITTEMENT DE GROUPE DANS UN RÉSEAU DE COMMUNICATION SANS-FIL**
GRUPPENBESTÄTIGUNG IN EINEM DRAHTLOSEN KOMMUNIKATIONSNETZWERK
ACKNOWLEDGEMENT OF UNIT IN A WIRELESS COMMUNICATION NETWORK

(30) Priorité: 13.07.2018 FR 1856503; 03.10.2018 FR 1859176
(43) Date de publication de la demande: 15.01.2020
(73) Titulaire: SAGEMCOM ENERGY & TELECOM SAS, 92500 Rueil-Malmaison (FR)
(72) Inventeur: TEBOULLE, Henri, 92500 Rueil Malmaison (FR); LE GOURRIEREC, Marc, 92500 Rueil Malmaison (FR); LECOCQ, Guillaume, 92500 Rueil Malmaison (FR)
(74) Mandataire: Cabinet Le Guen Maillet

(56) Documents cités:
- US-A1- 2004 002 336
- US-A1- 2013 077 555
- US-A1- 2018 054 250

## Description

La présente invention concerne une transmission d'acquittements de trames ascendantes dans un système de communication dans lequel des fenêtres de réception prédéterminées sont utilisées pour transmettre des trames descendantes acquittant les trames ascendantes en question.

L'Internet des Objets (« Internet of Things » en anglais) émerge. L'Internet des Objets représente l'extension de l'Internet à des choses et à des lieux du monde physique. Alors que l'Internet ne se prolonge habituellement pas au-delà du monde électronique, l'Internet des Objets représente des échanges d'informations et de données provenant de dispositifs présents dans le monde réel vers l'Internet, comme par exemple pour effectuer une collecte de relevés de consommations électriques ou de consommations d'eau. L'Internet des Objets est considéré comme la troisième évolution de l'Internet, baptisée Web 3.0. L'Internet des Objets est en partie responsable de l'accroissement actuel du volume de données à transmettre et à stocker, et est ainsi à l'origine de ce qu'on appelle le « Big Data ». L'Internet des Objets revêt un caractère universel pour désigner une mise en communication d'objets aux usages variés, par exemple dans le domaine industriel, agro-alimentaire, de la e-santé ou de la domotique.

Pour permettre à des objets communicants, aussi appelés dispositifs terminaux, de communiquer dans le cadre de l'Internet des Objets, des passerelles de collecte (« gathering gateways » en anglais) situées sur des points géographiquement hauts sont déployées par un opérateur. Hors opérations de maintenance, ces passerelles de collecte sont typiquement fixes et permanentes. On peut par exemple citer sur ce modèle les réseaux SigFox (marque déposée) ou ThingPark (marque déposée). Ces passerelles de collecte communiquent avec les objets communicants grâce à des communications radio moyenne ou longue portée, comme par exemple la technologie LoRaWAN (« Long Range Wide-Area Network » en anglais), aussi connue sous le diminutif « LoRa » (« Long Range » en anglais) du nom de l'alliance faisant la promotion de la technologie LoRaWAN. Ces passerelles de collecte servent ainsi de relais entre les objets communicants et un serveur (réseau coeur) configuré pour traiter des informations remontées par les dispositifs terminaux et pour envoyer des messages (e.g. instructions) auxdits dispositifs terminaux.

Pour pouvoir se mettre en veille autant que possible, les dispositifs terminaux appliquent, dans leurs communications indirectes avec 1e serveur (via une ou plusieurs passerelles de collecte), un mécanisme de communication dit en « Classe A » dans le protocole de transmission de données de type LoRaWAN. Ce mécanisme consiste à définir, de manière déterministe pour un dispositif terminal considéré et la passerelle de collecte qui agit comme relais pour le serveur, une ou plusieurs fenêtres de réception pendant lesquelles le dispositif terminal considéré écoute le medium de communication (deux fenêtres de réception dans le cas du protocole de transmission de données de type LoRaWAN) où les communications descendantes doivent être effectuées. Une ou plusieurs fenêtres de réception débutent à la fin d'une période de durée prédéfinie d'après une communication ascendante initiée par le dispositif terminal en question et ont, elles aussi, une durée prédéfinie. Une trame descendante qui doit être adressée audit dispositif terminal s'effectue alors dans l'une ou l'autre (le cas échéant) desdites plusieurs fenêtres de réception, notamment pour effectuer un acquittement de ladite trame ascendante. Il est en effet typiquement nécessaire que le dispositif terminal en question sache que le serveur a effectivement reçu les données de la trame ascendante transmise par ledit dispositif terminal. Cette approche par fenêtres de réception débutant à des instants prédéterminés de manière déterministe pour le dispositif terminal en question et la passerelle de collecte qui agit comme relais pour le serveur permet audit dispositif terminal de se mettre en veille entretemps et ainsi de préserver son autonomie énergétique.

Cependant, du point de vue de la gestion des transmissions de trames descendantes, cette approche offre peu d'opportunités pour transmettre des données audit dispositif terminal, à moins d'augmenter la quantité de fenêtres de réception ou d'en augmenter la durée. De plus, cet inconvénient est renforcé par le fait qu'une partie de ces fenêtres de réception sert à acquitter de manière formelle la trame ascendante qui a déclenché la définition desdites fenêtres de réception. En effet, pendant que la passerelle de collecte en question acquitte de cette manière la trame ascendante en question, le médium de communication sur lequel s'appuient les communications entre les dispositifs terminaux et les passerelles de collecte n'est pas pleinement libre pour effectuer d'autres communications. En d'autres termes, soit cela empêche d'autres communications, soit cela génère des interférences envers d'autres communications.

Le document US 2018/054250 A1 décrit la mise en place et l'utilisation de relais dans un système de type IEEE 802.11 (Wi-Fi) avec la possibilité d'effectuer des acquittements.

Il est souhaitable de pallier ces inconvénients de l'état de la technique, que l'on peut retrouver plus généralement dans les réseaux de communication sans-fil fonctionnant sur de telles fenêtres de réception, comme par exemple dans les systèmes de communication de type LPWAN (« Low-Power Wide Area Network » en anglais).

L'invention concerne un procédé de transmission d'acquittements dans un système de communication comportant un serveur, une pluralité de dispositifs terminaux, et au moins une passerelle de collecte servant de relais entre le serveur et les dispositifs terminaux, chaque dispositif terminal communiquant avec au moins une dite passerelle de collecte via un medium de communication sans-fil, le procédé étant implémenté par le serveur. Le procédé comporte les étapes suivantes : créer au moins un groupe et affecter des dispositifs terminaux à chaque groupe créé ; définir, pour chaque groupe créé, des instances d'une fenêtre de réception de groupe séparées par une période P, de sorte que les instances de fenêtres de réception de groupe surviennent à des instants déterministes ; recevoir des trames ascendantes en provenance des dispositifs terminaux ; pour un dit dispositif terminal affecté à un groupe, acquitter les trames ascendantes reçues dans une trame descendante transmise en mode point-à-multipoint dans une dite instance de la fenêtre de réception de groupe définie pour ledit groupe, ladite trame descendante incluant un acquittement de groupe pour toutes les trames ascendantes émises par des dispositifs terminaux du groupe pendant la période P précédant ladite instance de la fenêtre de réception de groupe ; et pour un dit dispositif terminal qui n'est pas affecté à un groupe, acquitter les trames ascendantes reçues en mode point-à-point. Ainsi, la consommation de bande passante du système de communication est plus efficace grâce à l'acquittement groupé.

Selon un mode de réalisation particulier, en affectant un dit dispositif terminal à un groupe, le serveur transmet audit dispositif terminal un message d'abonnement par lequel le serveur indique audit dispositif terminal que ledit dispositif terminal a été associé audit groupe, le message d'abonnement incluant une information d'index indiquant à quel index est associé ledit dispositif terminal au sein dudit groupe, l'index associant audit dispositif terminal une position de bit dans un champ des acquittements de groupe.

Selon un mode de réalisation particulier, le serveur transmet audit dispositif terminal un message d'abonnement par lequel le serveur indique audit dispositif terminal que ledit dispositif terminal a été associé audit groupe, et un index est implicitement associé audit dispositif terminal au sein dudit groupe, l'index associant audit dispositif terminal une position de bit dans un champ des acquittements de groupe, l'index étant de valeur égale à la valeur de Ng_b > 0 bits de poids faible parmi Nd bits utilisés pour représenter une adresse attribuée audit dispositif terminal pour communiquer dans le système de communication.

Selon un mode de réalisation particulier, le message d'abonnement inclut un champ de référence temporelle représentatif d'un instant auquel démarre, pour ledit groupe, la prochaine instance de la fenêtre de réception de groupe.

Selon un mode de réalisation particulier, le champ de référence temporelle inclut en outre une information complémentaire représentative d'une durée de la période P séparant les instances de fenêtre de réception de groupe pour ledit groupe.

Selon un mode de réalisation particulier, le champ de référence temporelle inclut en outre une information de variabilité de la période P séparant les instances de fenêtre de réception de groupe pour ledit groupe.

Selon un mode de réalisation particulier, la durée de la période P est variable selon une séquence prédéfinie de durées, et le champ de référence temporelle inclut une information indiquant où en est le groupe dans ladite séquence prédéfinie de durées, la séquence prédéfinie de durées étant alors connue à l'avance par les dispositifs terminaux ou incluse dans le message d'abonnement.

Selon un mode de réalisation particulier, l'acquittement de groupe inclut un champ de synchronisation temporelle fournissant un temps relatif correspondant à l'instant auquel survient la prochaine instance de la fenêtre de réception de groupe pour ledit groupe.

L'invention concerne également un serveur configuré pour implémenter ce premier procédé présenté ci-dessus dans l'un quelconque de ses modes de réalisation.

L'invention concerne également un procédé de réception d'acquittements dans un système de communication comportant un serveur, une pluralité de dispositifs terminaux, et au moins une passerelle de collecte servant de relais entre le serveur et les dispositifs terminaux, chaque dispositif terminal communiquant avec au moins une dite passerelle de collecte via un medium de communication sans-fil, le procédé étant implémenté par chaque dispositif terminal. Le procédé comporte les étapes suivantes : transmettre des trames ascendantes à destination du serveur ; lorsque ledit dispositif terminal a reçu du serveur un message d'affectation du dispositif terminal à un groupe, programmer une écoute du medium de communication sans-fil pendant des instances d'une fenêtre de réception de groupe séparées par une période P, de sorte que les instances de fenêtres de réception de groupe surviennent à des instants déterministes ; lorsque ledit dispositif terminal est affecté à un groupe, recevoir en mode point-à-multipoint des trames descendantes incluant des acquittements desdites trames ascendantes pendant les instances de la fenêtre de réception de groupe, chaque trame descendante incluant un acquittement de groupe pour toutes les trames ascendantes émises par des dispositifs terminaux du groupe pendant la période P précédant ladite instance de la fenêtre de réception de groupe ; et lorsque ledit dispositif terminal n'est pas affecté à un groupe, recevoir en mode point-à-point des trames descendantes incluant des acquittements desdites trames ascendantes.

Selon un mode de réalisation particulier, le procédé comporte les étapes suivantes : recevoir du serveur un message d'abonnement par lequel le serveur indique audit dispositif terminal que ledit dispositif terminal a été associé audit groupe, le message d'abonnement incluant une information d'index indiquant à quel index est associé ledit dispositif terminal au sein dudit groupe, l'index associant audit dispositif terminal une position de bit dans un champ des acquittements de groupe ; et sur réception d'un acquittement de groupe, déterminer si la trame ascendante précédemment transmise par ledit dispositif terminal est acquittée, en vérifiant la valeur à ladite position de bit dans le champ des acquittements de groupe.

Selon un mode de réalisation particulier, le procédé comporte l'étape suivante : recevoir du serveur un message d'abonnement par lequel le serveur indique audit dispositif terminal que ledit dispositif terminal a été associé audit groupe. De plus, un index est implicitement associé audit dispositif terminal au sein dudit groupe, l'index associant audit dispositif terminal une position de bit dans un champ des acquittements de groupe, l'index étant de valeur égale à la valeur de Ng_b > 0 bits de poids faible parmi Nd bits utilisés pour représenter une adresse attribuée audit dispositif terminal pour communiquer dans le système de communication. Et le procédé comporte en outre l'étape suivante : sur réception d'un acquittement de groupe, déterminer si la trame ascendante précédemment transmise par ledit dispositif terminal est acquittée, en vérifiant la valeur à ladite position de bit dans le champ des acquittements de groupe.

Selon un mode de réalisation particulier, le message d'abonnement inclut un champ de référence temporelle représentatif d'un instant auquel démarre, pour ledit groupe, la prochaine instance de la fenêtre de réception de groupe, et ledit dispositif terminal programme une écoute du medium de communication sans-fil en fonction du champ de référence temporelle.

Selon un mode de réalisation particulier, le champ de référence temporelle inclut en outre une information complémentaire représentative d'une durée de la période P séparant les instances de fenêtre de réception de groupe pour ledit groupe.

Selon un mode de réalisation particulier, le champ de référence temporelle inclut en outre une information de variabilité de la période P séparant les instances de fenêtre de réception de groupe pour ledit groupe.

Selon un mode de réalisation particulier, la durée de la période P est variable selon une séquence prédéfinie de durées, le champ de référence temporelle indique en outre où en est le groupe dans ladite séquence prédéfinie de durées, la séquence prédéfinie de durées étant alors connue à l'avance par le dispositif terminal ou incluse dans le message d'abonnement.

Selon un mode de réalisation particulier, l'acquittement de groupe inclut un champ de synchronisation temporelle fournissant un temps relatif correspondant à l'instant auquel survient la prochaine instance de la fenêtre de réception de groupe pour ledit groupe, et le procédé comporte en outre les étapes suivantes : programmer une écoute du medium de communication sans-fil pendant une instance de fenêtre de réception de groupe pour ledit groupe, indépendamment de toute transmission ascendante par ledit dispositif terminal ; et resynchroniser l'horloge interne dudit dispositif terminal grâce à une détermination d'un décalage entre un instant effectif de transmission, ou de réception, d'un acquittement de groupe reçu pendant l'instance de fenêtre de réception de groupe ainsi programmée et un instant précédemment estimé de transmission, ou de réception, dudit acquittement de groupe.

L'invention concerne également un dispositif terminal configuré pour implémenter ce second procédé présenté ci-dessus dans l'un quelconque de ses modes de réalisation.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication dans lequel la présente invention peut être implémentée ;
- la Fig. 2 illustre schématiquement un exemple d'architecture matérielle d'un dispositif de communication du système de communication de la Fig. 1 ;
- la Fig. 3 illustre schématiquement un exemple d'architecture protocolaire implémentée dans le système de communication de la Fig. 1 ;
- la Fig. 4 illustre schématiquement des agencements de fenêtres de réception, dans un mode de réalisation particulier de l'invention ;
- les Figs. 5A et 5B illustrent schématiquement des champs de messages échangés dans le système de communication de la Fig. 1, dans un mode de réalisation particulier de l'invention ;
- la Fig. 6 illustre schématiquement des échanges de messages dans le système de communication de la Fig. 1, dans un mode de réalisation particulier de l'invention ;
- la Fig. 7 illustre schématiquement un premier algorithme de programmation de fenêtres de réception, dans un mode de réalisation particulier de l'invention ; et
- la Fig. 8 illustre schématiquement un second algorithme de programmation de fenêtres de réception, dans un mode de réalisation particulier de l'invention.

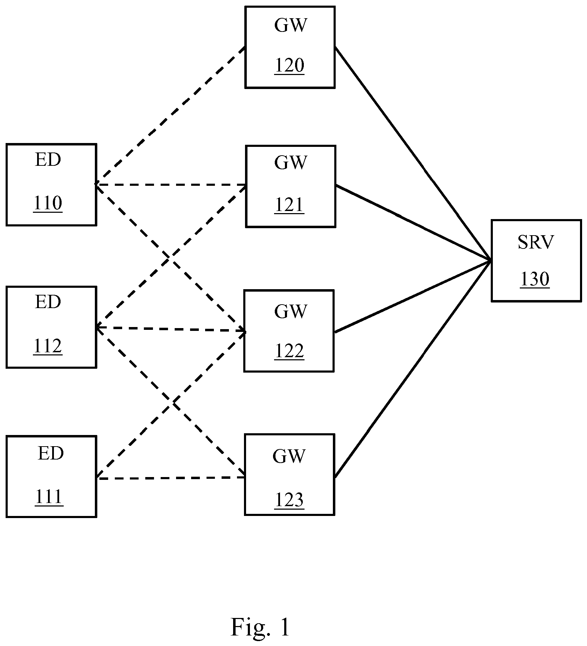

La **Fig. 1** illustre schématiquement un système de communication dans lequel la présente invention peut être implémentée.

Le système de communication comporte au moins une passerelle de collecte 120, 121, 122, 123 (notées GW, pour « GateWay » en anglais, sur les Figs.). Les passerelles de collecte 120, 121, 122, 123 disposent de liens de communication respectifs avec un serveur 130 (noté SRV sur les Figs.) auquel lesdites passerelles de collecte 120, 121, 122, 123 sont rattachées. Par exemple, le serveur 130 est de type LNS (« LoRaWAN Network Server » en anglais). Quatre passerelles de collecte sont représentées sur la Fig. 1, mais le système de communication peut comporter une quantité différente de passerelles de collecte.

Dans le système de communication, des messages doivent être remontés sous forme de trames depuis un ensemble de dispositifs terminaux 110, 111, 112 (notés ED, pour « End Device » en anglais, sur les Figs.) jusqu'au serveur 130. Trois dispositifs terminaux sont représentés sur la Fig. 1, mais le système de communication peut comporter une quantité différente de dispositifs terminaux.

Le serveur 130 a un rôle de contrôle et de collecte d'informations disponibles auprès des dispositifs terminaux 110, 111, 112, et les passerelles de collecte 120, 121, 122, 123 ont un rôle de relais entre les dispositifs terminaux 110, 111, 112 et le serveur 130. Des messages, notamment d'acquittement, peuvent aussi être transmis sous forme de trames depuis le serveur 130 jusqu'aux dispositifs terminaux 110, 111, 112 via les passerelles de collecte 120, 121, 122, 123.

Pour permettre de remplir ce rôle de relais, chaque passerelle de collecte 120, 121, 122, 123 dispose d'au moins une interface radio permettant à ladite passerelle de collecte de communiquer avec au moins un dispositif terminal 110, 111, 112 en s'appuyant sur un réseau de communication sans-fil, et préférentiellement selon une technologie de communication de type LPWAN. Ladite interface radio est par exemple de type LoRa permettant ainsi d'implémenter, au sein du système de communication, un protocole de transmission de données de type LoRaWAN. Ladite interface radio est telle qu'un dispositif terminal peut être à portée de communication par voie radio d'une pluralité de passerelles de collecte, selon la position géographique dudit dispositif terminal par rapport aux passerelles de collecte 120, 121, 122, 123 et des conditions de transmission par voie radio dans l'environnement dudit dispositif terminal et des passerelles de collecte 120, 121, 122, 123. C'est le cas par exemple du dispositif terminal 110 sur la Fig. 1, qui est à portée de communication par voie radio des passerelles de collecte 120, 121 et 122 (matérialisation par des traits pointillés sur la Fig. 1). De plus, chaque passerelle de collecte 120, 121, 122, 123 dispose d'au moins une autre interface permettant à ladite passerelle de collecte de communiquer avec le serveur 130. Par exemple, cette autre interface est une interface filaire permettant de communiquer avec le serveur 130 via l'Internet.

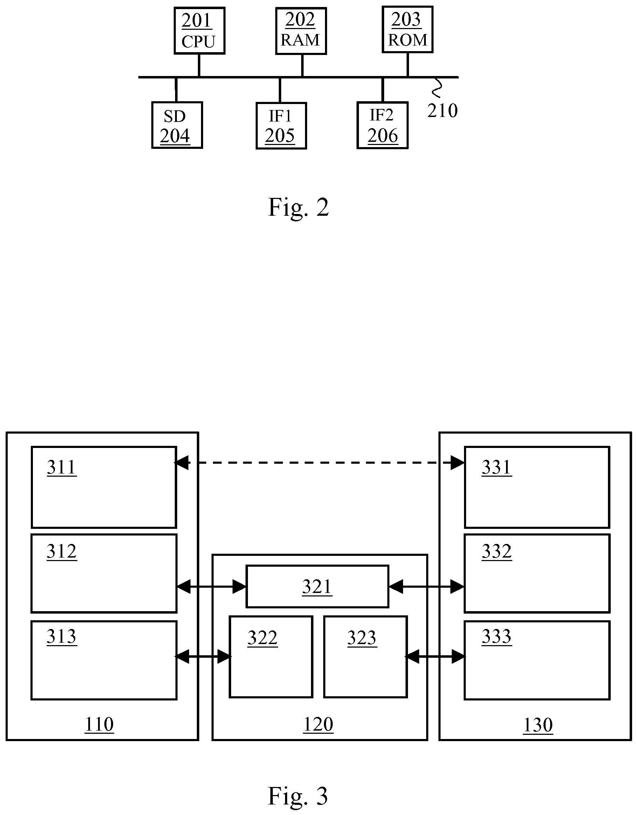

Un exemple d'architecture protocolaire implémentée dans le système de communication pour ainsi permettre aux dispositifs terminaux 110, 111, 112 et au serveur 130 de communiquer via les passerelles de collecte 120, 121, 122, 123 est décrit ci-après en relation avec la Fig. 3.

La **Fig. 2** illustre schématiquement un exemple d'architecture matérielle d'un dispositif de communication du système de communication de la Fig. 1. Chaque dispositif terminal 110, 111, 112 et/ou chaque passerelle de collecte 120, 121, 122, 123 et/ou le serveur 130 peuvent être construits sur la base d'une telle architecture matérielle.

Le dispositif de communication comporte, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) 204 ou un disque dur HDD (« Hard Disk Drive » en anglais) ; une interface de communication IF1 205, et éventuellement une autre interface de communication IF2 206.

Lorsque le dispositif de communication de la Fig. 2 représente un dispositif terminal du système de communication, l'interface de communication IF1 205 est configurée pour permettre audit dispositif terminal de communiquer avec des passerelles de collecte du système de communication.

Lorsque le dispositif de communication de la Fig. 2 représente une passerelle de collecte 120, 121, 122, 123 du système de communication, l'interface de communication IF1 205 est configurée pour permettre à ladite passerelle de collecte de communiquer avec des dispositifs terminaux du système de communication, et l'autre interface de communication IF2 206 est configurée pour permettre à ladite passerelle de collecte de communiquer avec le serveur 130.

Lorsque le dispositif de communication de la Fig. 2 représente le serveur 130, l'interface de communication IF1 205 est configurée pour permettre audit serveur 130 de communiquer avec les passerelles de collecte 120, 121, 122, 123, d'une manière compatible avec l'interface de communication IF2 206 des passerelles de collecte 120, 121, 122, 123.

Le processeur 201 est capable d'exécuter des instructions chargées dans la mémoire RAM 202 à partir de la mémoire ROM 203, d'une mémoire externe, d'un support de stockage, ou d'un réseau de communication. Lorsque le dispositif de communication en question est mis sous tension, le processeur 201 est capable de lire de la mémoire RAM 202 des instructions et de les exécuter. Ces instructions forment un programme d'ordinateur causant la mise en oeuvre, par le processeur 201, de tout ou partie des algorithmes et étapes décrits ici en relation avec le dispositif de communication en question.

Ainsi, tout ou partie des algorithmes et étapes décrits ici peut être implémenté sous forme logicielle par exécution d'un ensemble d'instructions par une machine programmable, tel qu'un DSP (« Digital Signal Processor » en anglais) ou un microcontrôleur. Tout ou partie des algorithmes et étapes décrits ici peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). D'une manière générale, le dispositif de communication en question comporte de la circuiterie électronique adaptée et configurée pour implémenter les algorithmes et étapes décrits ici en relation avec le dispositif de communication en question.

La **Fig. 3** illustre schématiquement un exemple d'architecture protocolaire implémentée dans le système de communication de la Fig. 1. La Fig. 3 illustre l'architecture protocolaire de manière répartie entre le dispositif terminal 110, la passerelle de collecte 120 et le serveur 130.

Le dispositif terminal 110 comporte une couche haute 311 et une couche basse 313, ainsi qu'une couche intermédiaire 312 faisant le lien entre la couche haute 311 et la couche basse 313. La couche haute 311 est une application client. Le dispositif terminal 110 peut ainsi comporter plusieurs applications client. La couche intermédiaire 312 implémente le protocole d'échange, par exemple de type LoRaWAN, entre le dispositif terminal 110 et le serveur 130 via la passerelle de collecte 120. La couche basse 313 est la couche physique (PHY) de l'interface radio du dispositif terminal 110, par exemple de type LoRa, qui permet audit dispositif terminal 110 de communiquer avec les passerelles de collecte du système de communication, comme par exemple la passerelle de collecte 120.

Le serveur 130 comporte une couche haute 331 et une couche basse 333, ainsi qu'une couche intermédiaire 332 faisant le lien entre la couche haute 331 et la couche basse 333. La couche haute 331 est une application serveur. Le serveur 130 peut ainsi comporter plusieurs applications serveur. Il convient de noter que la représentation de la Fig. 3 est une représentation logique, et que les applications serveur peuvent être exécutées sur des équipements respectifs distincts du serveur 130, ou que le serveur 130 peut être vu comme un ensemble constitué d'une pluralité de machines interconnectées qui met en oeuvre de manière collaborative les fonctionnalités décrites ici.

La couche intermédiaire 332 implémente le protocole d'échange, par exemple de type HTTPS (« HyperText Transfer Protocol Secure » en anglais), entre le serveur 130 et les passerelles de collecte 120, 121, 122, 123. La couche basse 333 est la couche physique (PHY) de l'interface du serveur 130 qui permet de communiquer avec les passerelles de collecte 120, 121, 122, 123.

La passerelle de collecte 120 comporte une première couche basse 322 et une seconde couche basse 323, ainsi qu'un module d'adaptation 321. La première couche basse 322 est la couche physique (PHY) de l'interface radio de la passerelle de collecte 120 qui permet de communiquer avec des dispositifs terminaux du système de communication, comme par exemple le dispositif terminal 110. La seconde couche basse 323 est la couche physique (PHY) de l'interface de la passerelle de collecte 120 qui permet de communiquer avec le serveur 130. Le module d'adaptation 321 est configuré pour convertir les messages reçus via la première couche basse 322 en messages adaptés à la seconde couche basse 323, et vice versa. Lors de cette conversion, la passerelle de collecte 120 peut enrichir ledit message par des informations complémentaires, comme par exemple une indication de niveau de signal reçu RSSI déterminé par ladite passerelle de collecte 120 sur réception dudit message.

L'architecture protocolaire représentée sur la Fig. 3 est telle que la couche intermédiaire 312 du dispositif terminal 110 communique avec la couche intermédiaire 321 de la passerelle de collecte 120, en s'appuyant sur les couches basses respectives du dispositif terminal 110 et de la passerelle de collecte 120. L'architecture protocolaire représentée sur la Fig. 3 est aussi telle que la couche haute 311 du dispositif terminal 110 communique avec la couche haute 331 du serveur 130, en s'appuyant sur les couches intermédiaires respectives 312, 321, 332 du dispositif terminal 110, de la passerelle de collecte 120 et du serveur 130. Une même application serveur peut ainsi communiquer avec des applications client respectives exécutées sur autant de dispositifs terminaux, et un même dispositif terminal exécutant une pluralité d'applications client peut ainsi communiquer avec autant d'applications serveur exécutées sur le serveur 130.

Les couches et modules protocolaires représentés peuvent être complétés, notamment par des piles protocolaires permettant au serveur 130 d'échanger avec la passerelle de collecte 120, notamment pour permettre au serveur 130 de configurer la passerelle de collecte 120.

Grâce à la création d'au moins un groupe et à l'affectation de plusieurs dispositifs terminaux audit groupe, le serveur 130 est apte à acquitter au sein d'une même trame descendante plusieurs trames ascendantes respectivement transmises par des dispositifs terminaux distincts, ou par des applications client distinctes (qu'elles soient ou non au sein d'un même dispositif terminal). Grâce à la définition du groupe et d'une fenêtre de réception de groupe associée, le serveur 130 donne rendez-vous aux dispositifs terminaux du groupe à des instants prédéterminés auxquels lesdits dispositifs terminaux peuvent écouter le medium de communication (entre lesdits dispositifs terminaux et les passerelles de collecte) pour déterminer si leur trame ascendante est acquittée dans un acquittement de groupe transmis à ce moment-là par une passerelle de collecte pour le compte du serveur 130.

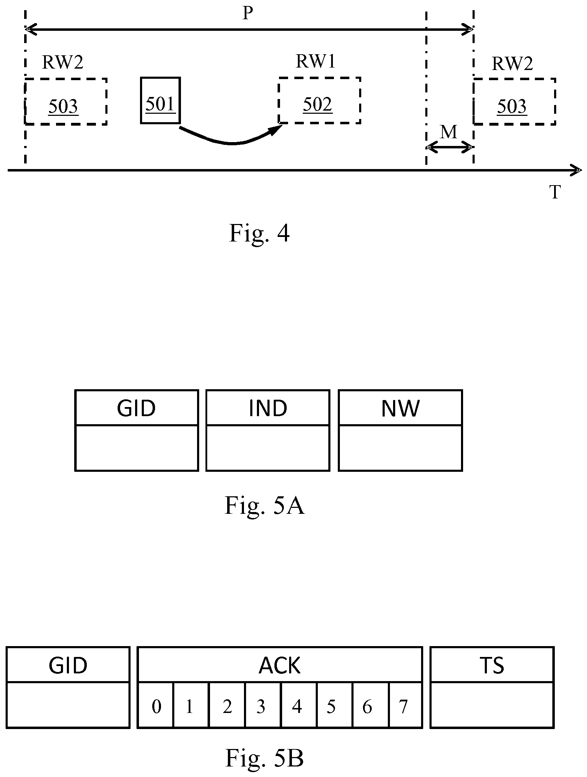

La **Fig. 4** illustre schématiquement des agencements de fenêtres de réception, dans un mode de réalisation particulier de l'invention. Considérons à titre illustratif que le dispositif terminal 110 transmet une trame ascendante 501, qui est relayée par une ou plusieurs passerelles de collecte vers le serveur 130. Considérons en outre que le dispositif terminal 110 (ou, du moins, une application client du dispositif terminal 110) appartient à un groupe pour lequel une fenêtre de réception RW2 503, dite fenêtre de réception de groupe, est définie à des instants prédéterminés. L'occurrence des instances de la fenêtre de réception RW2 503 se produit à des instants déterministes pour le serveur 130, ainsi que pour les dispositifs terminaux appartenant au groupe en question. La Fig. 4 montre deux instances successives de la fenêtre de réception de groupe RW2 503, séparées par une période P de temps T.

Préférentiellement, les instances de la fenêtre de réception RW2 503 surviennent à des instants substantiellement réguliers (durée substantiellement fixe de la période P). Dans un mode de réalisation particulier, les instances de la fenêtre de réception RW2 503 surviennent à des instants réguliers (durée fixe de la période P).

Du fait de la transmission de la trame ascendante 501, une instance d'une fenêtre de réception RW1 502, dite fenêtre de réception individuelle, débute à la fin d'une période de durée prédéfinie après la transmission de la trame ascendante 501. Plusieurs instances de la fenêtre de réception RW1 502 peuvent ainsi être créées de manière prédéfinie.

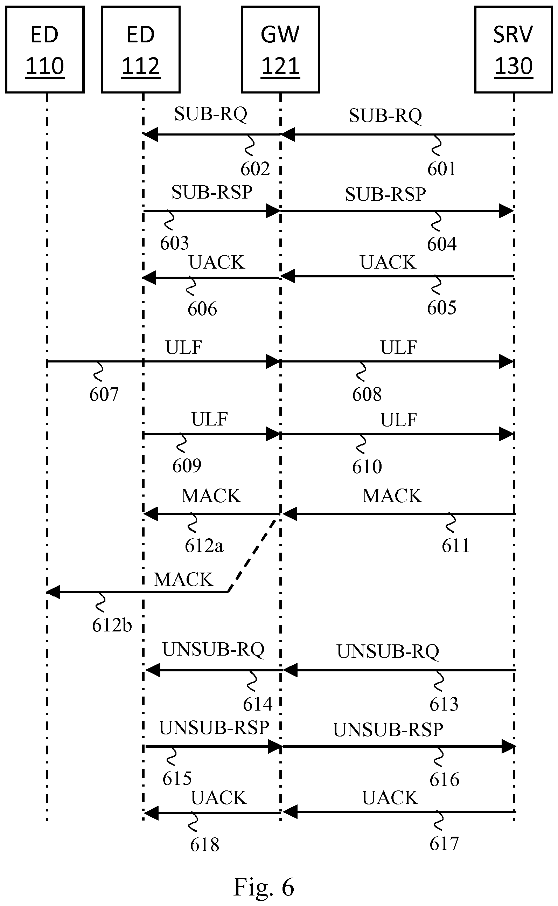

La fenêtre de réception individuelle RW1 502 est destinée à permettre au serveur 130 de faire des communications descendantes en mode-point-à-point, par l'intermédiaire d'une passerelle de collecte sélectionnée par le serveur 130, à destination du dispositif terminal 110. C'est le même mécanisme de communication dit en « Classe A » dans le protocole de transmission de données de type LoRaWAN, excepté que, lorsque le dispositif terminal 110 appartient à un groupe, l'acquittement de la trame ascendante 501 est effectué dans la fenêtre de réception de groupe RW2 503 suivante plutôt que dans la fenêtre de réception individuelle RW1 502. En effet, le serveur 130 n'ayant pas nécessairement d'informations ou de commandes à transmettre spécifiquement au dispositif terminal 110 à ce moment-là, effectuer une transmission descendante dans une instance de la fenêtre de réception individuelle RW1 502 pour simplement acquitter la trame ascendante 501 engendrerait une surconsommation (« overhead » en anglais) inutile de bande passante. On parle alors d'acquittement de groupe. Cet aspect est détaillé ci-après en relation avec la Fig. 6. Si toutefois le serveur 130 a des informations ou des commandes à transmettre spécifiquement au dispositif terminal 110 à ce moment-là, le serveur 130 peut effectuer une transmission descendante dans une instance de la fenêtre de réception individuelle RW1 502 et acquitter ladite trame ascendante au sein de la trame descendante en plus desdites informations ou commandes. On retrouve ici le comportement qui est par exemple appelé « piggy-back » dans le protocole LoRaWAN.

Il est considéré que le dispositif terminal 110 s'interdit de transmettre plus d'une trame ascendante correspondant à un groupe donné, auquel appartient ledit dispositif terminal 110, entre deux instances de la fenêtre de réception de groupe RW2 503 associée audit groupe. La cadence des instances de la fenêtre de réception de groupe RW2 503 est donc définie pour respecter les besoins applicatifs entre les dispositifs terminaux 110, 111, 112 et le serveur 130.

Dans un mode de réalisation particulier, le dispositif terminal 110 s'interdit de transmettre des trames ascendantes pendant certaines sous-périodes temporelles de la période P. Par exemple, le dispositif terminal 110 s'interdit de transmettre des trames ascendantes pendant une période de marge M qui précède (et jouxte) l'instant de début d'une instance de la fenêtre de réception de groupe RW2 503, comme représenté sur la Fig. 4. Cela évite de créer une incertitude quant à l'instance de la fenêtre de réception de groupe RW2 503 où l'acquittement de la trame ascendante en question est supposé se trouver.

Dans un mode de réalisation particulier, le dispositif terminal 110 assure que la transmission de la trame ascendante 501 n'entraîne pas qu'une instance de la fenêtre de réception individuelle RW1 502, qui est définie d'après l'instant de transmission de la trame ascendante 501, chevauche une instance de la fenêtre de réception de groupe RW2 503. En d'autres termes, le dispositif terminal 110 assure que la transmission de la trame ascendante 501 soit telle que toute instance de la fenêtre de réception individuelle RW1 502 soit distincte de toute instance de la fenêtre de réception de groupe RW2 503 définie pour le groupe auquel appartient ledit dispositif terminal 110 (ou son application client considérée).

Il convient de noter que la description est faite pour des dispositifs terminaux qui peuvent recevoir des trames descendantes dans des fenêtres de réception individuelles, comme c'est le cas dans la « Classe A » dans le protocole de transmission de données de type LoRaWAN. Le principe des fenêtres de réception de groupe peut toutefois s'appliquer à des dispositifs terminaux qui ont la possibilité d'utiliser des fenêtres de réception complémentaires définies dans des balises (« beacons » en anglais) transmises par les passerelles de collecte 120, 121, 122, 123, comme c'est le cas dans la « Classe B » dans le protocole de transmission de données de type LoRaWAN, où plusieurs dispositifs terminaux peuvent écouter le medium dans une même fenêtre temporelle. Le principe des fenêtres de réception de groupe peut toutefois aussi s'appliquer à des dispositifs terminaux qui écoutent en permanence le medium de communication, comme c'est le cas dans la « Classe C » dans le protocole de transmission de données de type LoRaWAN, car le gain en bande passante reste valable.

Les **Figs. 5A** et **5B** illustrent schématiquement des champs de messages échangés dans le système de communication de la Fig. 1, dans un mode de réalisation particulier de l'invention.

La Fig. 5A représente plus particulièrement des champs utilisés dans un message SUB-RQ par lequel le serveur 130 indique à un dispositif terminal que ledit dispositif terminal a été associé à un groupe par le serveur 130. En d'autres termes, le message SUB-RQ est un message d'annonce de souscription audit groupe.

Dans un mode de réalisation particulier, un même dispositif terminal peut être associé par le serveur 130 à plusieurs groupes. Notamment, le serveur 130 peut associer différentes applications client dudit dispositif terminal à différents groupes respectifs. Ainsi, un champ GID (pour « Group IDentifier » en anglais) fournit un identifiant de groupe permettant au dispositif terminal en question de savoir quel groupe lui est associé par le message SUB-RQ. Lorsqu'il n'existe qu'un seul groupe possible dans le système de communication ou lorsqu'il n'existe pas d'ambiguïté sur la désignation du groupe, ce champ GID peut être omis.

De plus, un champ d'indexation IND indique préférentiellement audit dispositif terminal à quel index (aussi appelé « rang ») est associé ledit dispositif terminal (ou l'application client en question) au sein dudit groupe.

L'index en question peut être attribué par le serveur 130 au dispositif terminal en question en prenant un index dans un ensemble d'index disponibles. Par exemple, le serveur 130 attribue les index dans leur ordre croissant ou décroissant parmi ledit ensemble d'index disponibles. Selon un autre exemple, le serveur 130 attribue les index par tirage aléatoire ou pseudo-aléatoire parmi ledit ensemble d'index disponibles. Dans une variante préférentielle, l'index en question peut être implicitement retrouvé par le dispositif terminal et il n'est alors pas nécessaire de lui indiquer explicitement. Pour ce faire, le serveur 130 se base sur l'adresse attribuée au dispositif terminal en question pour communiquer dans le système de communication de la Fig. 1. Il est en effet usuel d'attribuer dynamiquement des adresses aux dispositifs terminaux d'un système de communication pendant une phase d'authentification où lesdits dispositifs terminaux se déclarent auprès (d'un serveur) du système de communication. Dans le protocole LoRaWAN, cette adresse est appelée DevAddr.

Cette adresse est typiquement, mais non nécessairement, représentée sur un plus grand nombre de bits que ne le nécessite la capacité maximale du groupe. Par exemple, cette adresse attribuée dynamiquement est sur 32 bits, alors que la capacité maximale du groupe est de 256 dispositifs terminaux (ce ne nécessite strictement que 8 bits de représentation).

Considérons que la capacité maximale du groupe est Ng, qui ne nécessite que Ng_b > 0 bits de représentation et que les adresses attribuées aux dispositifs terminaux dans le système de communication de la Fig. 1 nécessitent strictement Nd > Ng_b bits de représentation. La loi des grands nombres fait en sorte que les Ng_b bits de poids faible parmi les Nd bits desdites adresses sont suffisamment diversifiés parmi les dispositifs terminaux du groupe en question pour éviter les conflits de valeurs. Chaque dispositif terminal se voit alors attribuer l'index au sein du groupe qui correspond aux Ng_b bits de poids faible parmi les Nd bits de l'adresse qui lui est attribuée pour communiquer dans le système de communication de la Fig. 1. Cela permet au serveur 130 et à chaque dispositif terminal de déterminer cet index de manière indépendante. Il est ainsi possible de se passer du champ IND susmentionné. Le serveur 130 peut toutefois tout de même notifier dans ledit champ IND l'index ainsi obtenu.

De retour à la Fig. 5A, un champ de référence temporelle NW (pour « Next Window » en anglais) fournit en outre audit dispositif terminal une information représentative de l'instant auquel démarre la prochaine instance de la fenêtre de réception de groupe RW2 503 pour ledit groupe. Cette information peut être un temps absolu ou relatif.

Dans le cas où le système de communication assure un synchronisme des horloges internes des différents éléments constitutifs dudit système de communication, ladite information peut être représentative d'un temps absolu. Il est toutefois plus en termes d'implémentation que ladite information soit représentative d'un temps relatif (c'est-à-dire un délai à compter d'un moment déterministe).

Dans le cas où l'information est un temps relatif, le serveur 130 calcule ce temps relatif en tenant compte de l'instant d'occurrence de l'instance de la fenêtre de réception individuelle RW1 502 dans laquelle le message SUB-RQ est transmis. Ladite information contenue dans le champ de référence temporelle NW peut être complétée par une information complémentaire représentative d'une durée de la période P séparant les instances de fenêtre de réception de groupe RW2 503 pour ledit groupe, qui peut elle-même être complétée par une information de variabilité de la période P séparant les instances de fenêtre de réception de groupe RW2 503 pour ledit groupe. La durée de la période P est par exemple rendue variable selon une séquence prédéfinie de durées. A noter que cette variabilité peut être représentée par des aléas signés autour d'une valeur nominale de durée de la période P. Le champ de référence temporelle NW indique alors où en est le groupe dans ladite séquence prédéfinie de durées (*e.g.* par un index au sein de ladite séquence de durées), la séquence prédéfinie de durées étant alors connue à l'avance par les dispositifs terminaux (e.g. par configuration à l'installation) ou renseignée dans le champ de référence temporelle NW.

La Fig. 5B représente plus particulièrement des champs utilisés dans un message d'acquittement de groupe MACK (« Multicast ACKnowledgement » en anglais), par lequel le serveur 130 effectue un acquittement groupé pour un ensemble de dispositifs terminaux appartenant à un même groupe. La transmission de tout acquittement de groupe MACK est effectuée en point-à-multipoint dans une instance de la fenêtre de réception de groupe RW2 503. Le champ GID déjà décrit identifie, au besoin, le groupe concerné.

De plus, un champ ACK identifie quels sont les indexes des dispositifs terminaux auxquels l'acquittement de groupe MACK est destiné parmi les dispositifs terminaux dudit groupe. Sur la Fig. 5B, huit sous-champs d'index 0 à 7 sont représentés de manière purement illustrative (par exemple, le champ ACK pourrait contenir 256 bits, permettant ainsi de constituer des groupes de 256 dispositifs terminaux ou applications client). De préférence, des groupes de capacité maximale égale à Nb dispositifs terminaux, où Nb est une puissance de 2, sont constitués.

Lorsqu'une première valeur prédéfinie (par exemple « 1 ») est placée à l'index associé à un dispositif terminal, ledit message d'acquittement de groupe MACK inclut alors un acquittement destiné au dispositif terminal en question ; et lorsqu'une seconde valeur prédéfinie (par exemple « 0 ») est placée à l'index associé au dispositif terminal en question, ledit message d'acquittement de groupe MACK n'inclut alors pas d'acquittement destiné au dispositif terminal en question.

De plus, un champ de synchronisation temporelle TS (pour « Time Synchronization » en anglais) est préférentiellement inclus dans le message d'acquittement de groupe MACK. Le champ de synchronisation temporelle TS fournit une information indiquant un temps relatif représentatif de l'instant auquel survient la prochaine instance de la fenêtre de réception de groupe. Ce champ de synchronisation temporelle TS a la même fonction que le champ de référence temporelle NW, mais le champ de synchronisation temporelle TS est relatif, là où le champ de référence temporelle NW pourrait être absolu.

Dans le cas où la période P séparant les instances de fenêtre de réception de groupe est variable, le champ TS indique alors aussi où en est le groupe dans la séquence prédéfinie de durées susmentionnées.

La **Fig. 6** illustre schématiquement des échanges de messages dans le système de communication de la Fig. 1, dans un mode de réalisation particulier de l'invention. Il est considéré dans la Fig. 6 que le dispositif terminal 110 (ou une application client du dispositif terminal 110) est affecté à un groupe et que le serveur 130 décide d'affecter aussi le dispositif terminal 112 (ou une application client du dispositif terminal 112) à ce même groupe.

Lorsqu'il existe plusieurs groupes possibles dans le système de communication, le serveur 130 affecte les dispositifs terminaux à tel ou tel groupe en fonction des applications client desdits dispositifs terminaux. Selon un autre critère, le serveur 130 affecte les dispositifs terminaux à tel ou tel groupe en fonction des passerelles de collecte qui relaient les trames ascendantes desdits dispositifs terminaux, ou qui relaient statistiquement le plus souvent les trames ascendantes desdits dispositifs terminaux. Selon encore un autre critère, le serveur 130 affecte les dispositifs terminaux à tel ou tel groupe en fonction de la localisation géographique desdits dispositifs terminaux. Des combinaisons de critères incluant au moins l'un parmi ceux ci-dessus peuvent être réalisées.

Lorsqu'un premier groupe a atteint une quantité maximum de dispositifs terminaux autorisés dans ledit premier groupe (notamment parce que le message MACK a une capacité maximum d'acquittements simultanés), au moins un second groupe est créé pour y inclure ultérieurement d'autres dispositifs terminaux qui remplissent les critères d'inclusion dans le premier groupe. Il est alors possible, au besoin, d'équilibrer les groupes ainsi créés, en désassociant un ou plusieurs dispositifs terminaux d'un groupe pour les associer ensuite à un autre groupe. En variante, lorsqu'un groupe a atteint la quantité maximum de dispositifs terminaux autorisés dans ledit groupe, il est possible de remplacer un ou plusieurs dispositifs terminaux dudit groupe par d'autres dispositifs terminaux.

Dans une étape 601, le serveur 130 transmet une trame descendante incluant un message SUB-RQ à destination du dispositif terminal 112 via la passerelle de collecte 121. Le serveur 130 transmet ledit message SUB-RQ en réponse à une trame ascendante (non représentée sur la Fig. 6) transmise par le dispositif terminal 112, de sorte que la passerelle de collecte 121 puisse transmettre ledit message SUB-RQ, ainsi qu'un acquittement individuel (en mode point-à-point) de ladite trame ascendante, dans une instance de la fenêtre de réception individuelle RW 1 502 qui est définie d'après l'instant de transmission de ladite trame ascendante. Outre des champs d'entête permettant d'assurer les communications selon l'architecture protocolaire décrite en relation avec la Fig. 3, le message SUB-RQ inclut des champs, tels que décrits en relation avec la Fig. 5A, permettant d'informer le dispositif terminal 112 que le serveur 130 associe le dispositif terminal 112 au groupe en question.

Préférentiellement, le serveur 130 transmet la trame qui inclut le message SUB-RQ en réponse à une trame ascendante transmise par l'application client communiquant avec une application serveur auquel le groupe en question est associé. Ainsi, le dispositif terminal 112 sait à quelle application client (si ambiguïté il y a) correspond le groupe en question.

Dans une étape 602, la passerelle de collecte 121 transmet le message SUB-RQ à destination du dispositif terminal 112 dans ladite instance de la fenêtre de réception individuelle RW1 502. L'annonce de souscription au groupe en question est ainsi faite en mode point-à-point.

Dans une étape 603, le dispositif terminal 112 transmet une trame ascendante incluant un message SUB-RSP par lequel le dispositif terminal 112 confirme la réception du message SUB-RQ. Par le message SUB-RSP, le dispositif terminal 112 a la possibilité d'accepter ou de refuser la souscription. Par exemple, le dispositif terminal 112 peut d'ores et déjà appartenir à un ou plusieurs groupes et avoir atteint une limite maximum (e.g. 4) de groupes simultanés autorisée. Selon un autre exemple, accepter de souscrire à un groupe entraîne pour le dispositif terminal 112 une dépense énergétique un tout petit peu plus importante, puisque le dispositif terminal 112 va devoir sortir de veille plus fréquemment pour écouter le medium de communication. Le dispositif terminal 112 peut par exemple refuser de souscrire à un groupe lorsque le niveau de réserves énergétiques du dispositif terminal 112 est en dessous d'un seuil prédéfini. Considérons ici que le dispositif terminal 112 accepte la souscription proposée par le serveur 130.

Dans une étape 604, la passerelle de collecte 121 a capté la trame ascendante transmise à l'étape 603 par le dispositif terminal 112 et effectue donc un relais du message SUB-RSP à destination du serveur 130, qui est alors informé que le dispositif terminal 112 a accepté la souscription au groupe en question. La trame ascendante transmise à l'étape 603 peut avoir été relayée au serveur 130 par plusieurs passerelles à portée radio du dispositif terminal 112, en charge alors au serveur 130 d'assurer la déduplication de trames.

Dans une étape 605, le serveur 130 acquitte, par un message UACK (« Unicast ACK » en anglais) la trame ascendante transmise par le dispositif terminal 112 à l'étape 603. Cet acquittement individuel est relayé à destination du dispositif terminal 112 par la passerelle de collecte 121 dans une étape 606. La transmission de cet acquittement individuel est donc effectuée en mode point-à-point, c'est-à-dire dans une instance de la fenêtre de réception individuelle RW1 502 qui est définie d'après un instant de transmission de la trame ascendante de l'étape 603.

Ultérieurement, dans une étape 607, le dispositif terminal 110 transmet une trame ascendante ULF (pour « UpLink Frame » en anglais) à destination du serveur 130. Cette trame ascendante ULF est captée par la passerelle de collecte 121 qui en effectue un relais, dans une étape 608, vers le serveur 130. Ici encore, cette trame ascendante ULF peut avoir été relayée au serveur 130 par plusieurs passerelles à portée radio du dispositif terminal 112, en charge alors au serveur 130 d'assurer la déduplication de trames.

Et dans une étape 609, le dispositif terminal 112 transmet une autre trame ascendante ULF à destination du serveur 130. Cette trame ascendante ULF est captée par la passerelle de collecte 121 (et/ou par une autre passerelle de collecte) qui en effectue un relais, dans une étape 610, vers le serveur 130.

Considérons que ces deux trames ascendantes ULF ont été transmises pendant une même période P qui sépare deux instances de fenêtre de réception de groupe RW2 503 pour le groupe associé aux dispositifs terminaux 110 et 112 (ou à leurs applications client respectives en question).

Dans une étape 611, le serveur 130 transmet un acquittement de groupe MACK pour les trames ascendantes ULF transmises dans les étapes 607 et 609. Dans le champ ACK, les valeurs associées aux indexes des dispositifs terminaux 110 et 112 indiquent que le serveur 130 acquitte les transmissions ascendantes ULF des étapes 607 et 609. Cet acquittement de groupe MACK est relayé, dans une étape 612, par la passerelle de collecte 121 dans l'instance de la fenêtre de réception de groupe RW2 503 qui suit la période P pendant laquelle les trames ascendantes ULF ont été transmises aux étapes 607 et 609. Sur la Fig. 6, l'étape 612 est décomposée en deux sous étapes 612a et 612b pour montrer que la transmission de l'acquittement de groupe MACK est effectuée en mode point-à-multipoint. Les dispositifs terminaux 110 et 112 étant à l'écoute du medium de communication dans l'instance de la fenêtre de réception de groupe RW2 503 qui les concerne, les dispositifs terminaux 110 et 112 reçoivent l'acquittement de groupe MACK relayé par la passerelle de collecte 121. Les dispositifs terminaux 110 et 112 analysent alors l'acquittement de groupe MACK pour déterminer si leur propre index (ou rang) dans le champ ACK indique que les trames ascendantes ULF qu'ils ont précédemment transmises aux étapes 607 et 609 sont acquittées par le serveur 130. Dans le cas contraire, la trame ascendante ULF non acquittée doit être ultérieurement retransmise par le dispositif terminal concerné.

Pour que la passerelle de collecte 121 sache à quel moment transmettre l'acquittement de groupe MACK, le serveur 130 indique dans un entête d'encapsulation de l'acquittement de groupe MACK une information représentative de l'instant auquel la passerelle de collecte 121 est supposée relayer l'acquittement de groupe MACK à destination des dispositifs terminaux. La passerelle de collecte 121 peut d'ailleurs à ce moment-là transmettre plusieurs copies successives (e.g. 3 copies) de l'acquittement de groupe MACK pour augmenter les chances de réception du côté des dispositifs terminaux concernés.

A noter que pour ce qui concerne les trames descendantes à transmettre dans les instances de fenêtre de réception individuelle RW1 502, la passerelle de collecte 121 garde trace de l'instant de réception de la trame ascendante concernée et le serveur 130 indique, dans un entête d'encapsulation de ladite trame descendante, un temps relatif après lequel la passerelle de collecte 121 est supposée relayer la trame descendante. La passerelle de collecte 121 relaie alors de ladite trame descendante après expiration dudit temps relatif à compter de l'instant de réception de la trame ascendante concernée. En variante, la passerelle de collecte 121 peut déterminer d'elle-même à quel moment démarre chaque instance de la fenêtre de réception individuelle RW1 502 d'après l'instant de réception de la trame ascendante concernée, en ayant une connaissance préalable du temps relatif prédéfini devant séparer ladite instance de la fenêtre de réception individuelle RW1 de l'instant de réception de la trame ascendante concernée.

Pour désassocier un dispositif terminal d'un groupe, une procédure proche de celle utilisée pour associer le dispositif terminal au groupe est mise en place. Par exemple, le serveur 130 peut vouloir désassocier ledit dispositif terminal d'un groupe pour l'y remplacer par un autre dispositif terminal dont la présence dans ledit groupe est plus adaptée, par exemple parce que ledit autre dispositif terminal transmet plus fréquemment ou parce que ledit autre dispositif terminal est géographiquement localisé plus à proximité des autres dispositifs terminaux dudit groupe.

Considérons le cas d'une désassociation du dispositif terminal 112. Ainsi, dans une étape 613, le serveur 130 transmet une trame descendante incluant un message UNSUB-RQ à destination du dispositif terminal 112 via la passerelle de collecte 121. Le serveur 130 transmet ledit message UNSUB-RQ en réponse à une trame ascendante transmise par le dispositif terminal 112 de sorte que la passerelle de collecte 121 puisse transmettre ledit message UNSUB-RQ, ainsi qu'un acquittement individuel (en mode point-à-point) de ladite trame ascendante, dans une instance de la fenêtre de réception individuelle RW1 502 qui est définie d'après un instant de transmission de ladite trame ascendante. Outre des champs d'entête permettant d'assurer les communications selon l'architecture protocolaire décrite en relation avec la Fig. 3, le message UNSUB-RQ inclut le champ GID permettant d'identifier, au besoin, le groupe en question.

Dans une étape 614, la passerelle de collecte 121 transmet le message UNSUB-RQ à destination du dispositif terminal 112 dans ladite instance de la fenêtre de réception individuelle RW1 502. L'annonce de désassociation au groupe en question est ainsi faite en mode point-à-point.

Dans une étape 615, le dispositif terminal 112 transmet une trame ascendante incluant un message UNSUB-RSP par lequel le dispositif terminal 112 confirme la réception du message UNSUB-RQ. Par le message UNSUB-RSP, le dispositif terminal 112 confirme avoir pris en compte le désabonnement du groupe, ce qui signifie que les acquittements des trames ascendantes émises par le dispositif terminal 112 (ou par l'application client concernée) se font ensuite dans des instances de fenêtres de réception individuelles RW1 502.

Dans une étape 616, la passerelle de collecte 121 a capté la trame ascendante transmise à l'étape 615 par le dispositif terminal 112 et effectue donc un relais du message UNSUB-RSP à destination du serveur 130, qui est alors informé que le dispositif terminal 112 a confirmé avoir pris en compte le désabonnement du groupe. Ici encore, la trame ascendante en question peut avoir été relayée au serveur 130 par plusieurs passerelles à portée radio du dispositif terminal 112, en charge alors au serveur 130 d'assurer la déduplication de trames.

Dans une étape 617, le serveur 130 acquitte, par un message UACK, la trame ascendante transmise par le dispositif terminal 112 à l'étape 615. Cet acquittement individuel UACK est relayé à destination du dispositif terminal 112 par la passerelle de collecte 121 dans une étape 618. La transmission de cet acquittement individuel UACK est donc effectuée en mode point-à-point, c'est-à-dire dans une instance de la fenêtre de réception individuelle RW1 502 qui est définie d'après un instant de transmission de la trame ascendante de l'étape 615.

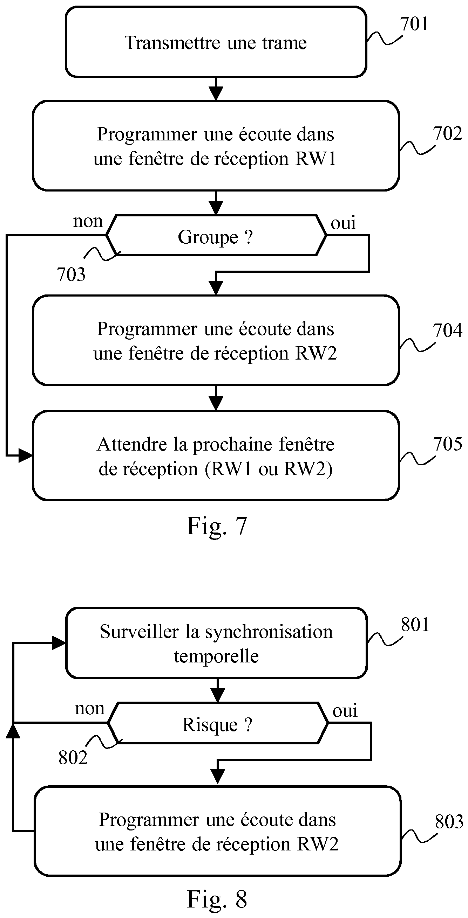

La **Fig. 7** illustre schématiquement un premier algorithme de programmation de fenêtres de réception, dans un mode de réalisation particulier de l'invention. L'algorithme de la Fig. 7 est implémenté par les dispositifs terminaux 110, 111, 112. Considérons à titre illustratif que l'algorithme de la Fig. 7 est implémenté par le dispositif terminal 110.

Dans une étape 701, le dispositif terminal 110 transmet une trame ascendante, en vue d'une réception par au moins une passerelle de collecte en charge de la relayer vers le serveur 130.

Dans une étape 702, le dispositif terminal 110 programme en conséquence une écoute du médium de communication dans au moins une instance de fenêtre de réception individuelle RW1 502.

Dans une étape 703, le dispositif terminal 110 vérifie si ledit dispositif terminal 110 appartient à un groupe (ou si l'application client du dispositif terminal 110 qui est concernée par l'envoi de ladite trame ascendante appartient à un groupe). Si tel est le cas, une étape 704 est effectuée ; sinon, une étape 705 est effectuée.

Dans l'étape 704, le dispositif terminal 110 programme en conséquence une écoute du médium de communication dans la prochaine instance de la fenêtre de réception de groupe RW2 503 associée audit groupe. Il est rappelé ici que, lorsque le dispositif terminal 110 reçoit le message SUB-RQ, le dispositif terminal 110 reçoit du serveur 130 dans le champ de référence temporelle NW une information représentative de l'instant auquel démarrera une prochaine instance de la fenêtre de réception de groupe RW2 503. De plus, il est rappelé ici que le dispositif terminal 110 a connaissance des durées des périodes P qui séparent les instances de fenêtres de réception de groupe RW2 pour le groupe auquel ledit dispositif terminal 110 (ou l'application client concernée) appartient. Ainsi, le dispositif terminal 110 a connaissance des instants auxquels chaque dite instance de la fenêtre de réception de groupe RW2 503 en question est supposée survenir. Puis l'étape 705 est effectuée.

Dans l'étape 705, le dispositif terminal 110 se met en attente de la prochaine instance de fenêtre de réception programmée. Le dispositif terminal 110 peut se mettre en veille le temps que survienne la prochaine instance de fenêtre de réception programmée.

La **Fig. 8** illustre schématiquement un second algorithme de programmation de fenêtres de réception, dans un mode de réalisation particulier de l'invention. Considérons à titre illustratif que l'algorithme de la Fig. 8 est implémenté par le dispositif terminal 110.

Outre la possibilité de recevoir des acquittements de groupe MACK, le dispositif terminal 110 peut utiliser les instances de la fenêtre de réception de groupe RW2 503 pour se synchroniser temporellement dans le système de communication. En effet, étant donné que le dispositif terminal 110 a la possibilité de se mettre en veille, son horloge interne peut dériver au fil du temps et une resynchronisation temporelle régulière est alors nécessaire. Le dispositif terminal 110 peut alors s'appuyer sur l'instant de réception effectif des messages MACK pour effectuer une telle resynchronisation temporelle. Ainsi, lorsque le dispositif terminal 110 a transmis une trame ascendante, le dispositif terminal 110 peut profiter de l'apprentissage de l'instant de réception de la trame descendante transmise dans l'instance de la fenêtre de réception de groupe RW2 503 suivante pour effectuer la resynchronisation temporelle en même temps que de vérifier que le serveur 130 acquitte effectivement la trame ascendante en question. Il est aussi possible que ledit dispositif terminal 110 n'ait pas à transmettre de trame ascendante pendant un certain temps, de sorte que son horloge interne puisse trop dériver avant que survienne l'instance de la fenêtre de réception de groupe RW2 503 qui suit sa prochaine transmission de trame ascendante. Alors, dans un mode de réalisation particulier, le dispositif terminal 110 va chercher à se mettre à l'écoute du médium de communication dans une instance de la fenêtre de réception de groupe RW2 indépendamment de ses transmissions de trames ascendantes, pour rester synchronisé temporellement dans le système de communication.

Ainsi, dans une étape 801, le dispositif terminal 110 surveille la synchronisation temporelle de son horloge interne. En d'autres termes, le dispositif terminal 110 surveille la dérive maximum théorique de son horloge interne depuis la dernière synchronisation temporelle effectuée par le dispositif terminal 110, par exemple depuis la dernière fois que le dispositif terminal 110 a resynchronisé son horloge interne grâce à l'apprentissage de l'instant de transmission d'un acquittement de groupe MACK. Par exemple, la dérive maximum théorique de l'horloge interne du dispositif terminal 110 est de l'ordre de 10 ppm, c'est-à-dire moins d'une seconde par jour en plus ou en moins.

Dans une étape 802, le dispositif terminal 110 détermine s'il y a un risque que son horloge interne ait trop dérivé par rapport au reste du système de communication et notamment du serveur 130 et/ou rapport à un seuil prédéfini. Par exemple, le dispositif terminal 110 est programmé pour sortir de veille 100 millisecondes avant le début théorique de toute fenêtre de réception. Le dispositif terminal 110 peut alors chercher à se resynchroniser temporellement toutes les 2 heures. S'il y a un risque que l'horloge interne ait trop dérivé par rapport au reste du système de communication et notamment du serveur 130 et/ou rapport à un seuil prédéfini, une étape 803 est effectuée ; sinon, l'étape 801 est réitérée.

Dans l'étape 803, le dispositif terminal 110 programme en conséquence une écoute du médium de communication dans la prochaine fenêtre de réception de groupe RW2 503, comme déjà décrit en relation avec la Fig. 7. Il déterminera alors l'instant effectif de transmission (ou de réception) de l'acquittement de groupe MACK, bien que ce dernier ne le concerne pas. Cela lui permet de connaître le décalage entre l'instant effectif de transmission (ou de réception) de l'acquittement de groupe MACK et l'instant auquel ledit dispositif terminal 110 avait précédemment estimé que devait survenir l'instant de transmission (ou de réception) de l'acquittement de groupe MACK de son point de vue (du fait de son horloge interne). La détermination de ce décalage lui permet donc de recaler son horloge interne pour rester synchroniser. Puis l'étape 801 est réitérée.

## Revendications

1. Procédé de transmission d'acquittements dans un système de communication comportant un serveur (130), une pluralité de dispositifs terminaux (110, 111, 112), et au moins une passerelle de collecte (120, 121, 122, 123) servant de relais entre le serveur (130) et les dispositifs terminaux (110, 111, 112), chaque dispositif terminal (110, 111, 112) communiquant avec au moins une dite passerelle de collecte (120, 121, 122, 123) via un medium de communication sans-fil, le procédé étant implémenté par le serveur (130), le procédé comportant les étapes suivantes :
- créer au moins un groupe et affecter (601) des dispositifs terminaux (110, 112) à chaque groupe créé ;
- définir, pour chaque groupe créé, des instances d'une fenêtre de réception de groupe (503) pendant lesquelles les dispositifs terminaux dudit groupe peuvent écouter le medium de communication sans-fil pour déterminer si leur trame ascendante est acquittée dans un acquittement de groupe, les instances d'une fenêtre de réception de groupe (503) étant séparées par une période P de durée prédéterminée connue du serveur et de chaque dispositif terminal dudit groupe, de sorte que les instances de fenêtres de réception de groupe (503) surviennent à des instants déterministes ;
- recevoir (608, 610) des trames ascendantes en provenance des dispositifs terminaux (110, 111, 112) ;
- pour un dit dispositif terminal (110) affecté à un groupe, acquitter via la passerelle agissant comme relais les trames ascendantes reçues dans une trame descendante (611) transmise en mode point-à-multipoint (612a, 612b) dans une dite instance de la fenêtre de réception de groupe (503) définie pour ledit groupe, ladite trame descendante incluant un acquittement de groupe pour toutes les trames ascendantes (ULF) émises par des dispositifs terminaux (110, 112) du groupe pendant la période P précédant ladite instance de la fenêtre de réception de groupe (503) ; et
- pour un dit dispositif terminal (111) qui n'est pas affecté à un groupe, acquitter (605, 617) via la passerelle agissant comme relais les trames ascendantes reçues en mode point-à-point.

2. Procédé selon la revendication 1, **caractérisé en ce que**, en affectant un dit dispositif terminal (110, 112) à un groupe, le serveur (130) transmet (601) audit dispositif terminal (110, 112) un message d'abonnement par lequel le serveur (130) indique audit dispositif terminal (110, 112) que ledit dispositif terminal (110, 112) a été associé audit groupe, le message d'abonnement incluant une information d'index (IND) indiquant à quel index est associé ledit dispositif terminal (110, 112) au sein dudit groupe, l'index associant audit dispositif terminal (110, 112) une position de bit dans un champ (ACK) des acquittements de groupe.

3. Procédé selon la revendication 1, **caractérisé en ce que** le serveur (130) transmet (601) audit dispositif terminal (110, 112) un message d'abonnement par lequel le serveur (130) indique audit dispositif terminal (110, 112) que ledit dispositif terminal (110, 112) a été associé audit groupe, et **en ce qu'**un index est implicitement associé audit dispositif terminal (110, 112) au sein dudit groupe, l'index associant audit dispositif terminal (110, 112) une position de bit dans un champ (ACK) des acquittements de groupe, l'index étant de valeur égale à la valeur de Ng_b > 0 bits de poids faible parmi Nd bits utilisés pour représenter une adresse attribuée audit dispositif terminal (110, 112) pour communiquer dans le système de communication, avec Nd > Ng_b.

4. Procédé selon l'une quelconque des revendications 2 et 3, **caractérisé en ce que** le message d'abonnement inclut un champ de référence temporelle (NW) représentatif d'un instant auquel démarre, pour ledit groupe, la prochaine instance de la fenêtre de réception de groupe (503).

5. Procédé selon la revendication 4, **caractérisé en ce que** le champ de référence temporelle (NW) inclut en outre une information complémentaire représentative d'une durée de la période P séparant les instances de fenêtre de réception de groupe (503) pour ledit groupe.

6. Procédé selon la revendication 5, **caractérisé en ce que** le champ de référence temporelle (NW) inclut en outre une information de variabilité de la période P séparant les instances de fenêtre de réception de groupe (503) pour ledit groupe.

7. Procédé selon la revendication 6, **caractérisé en ce que** la durée de la période P est variable selon une séquence prédéfinie de durées, et le champ de référence temporelle (NW) inclut une information indiquant où en est le groupe dans ladite séquence prédéfinie de durées, la séquence prédéfinie de durées étant alors connue à l'avance par les dispositifs terminaux (110, 112) ou incluse dans le message d'abonnement.

8. Procédé selon l'une quelconque des revendications 1 à 7, **caractérisé en ce que** l'acquittement de groupe inclut un champ de synchronisation temporelle (TS) fournissant un temps relatif correspondant à l'instant auquel survient la prochaine instance de la fenêtre de réception de groupe (503) pour ledit groupe.

9. Procédé de réception d'acquittements dans un système de communication comportant un serveur (130), une pluralité de dispositifs terminaux (110, 111, 112), et au moins une passerelle de collecte (120, 121, 122, 123) servant de relais entre le serveur (130) et les dispositifs terminaux (110, 111, 112), chaque dispositif terminal (110, 111, 112) communiquant avec au moins une dite passerelle de collecte (120, 121, 122, 123) via un medium de communication sans-fil, le procédé étant implémenté par chaque dispositif terminal (110, 111, 112), le procédé comportant les étapes suivantes :
- transmettre (607, 609) des trames ascendantes à destination du serveur (130) ;
- lorsque ledit dispositif terminal (110, 112) a reçu du serveur (130) un message d'affectation du dispositif terminal (110, 112) à un groupe, programmer (704) une écoute du medium de communication sans-fil pendant des instances d'une fenêtre de réception de groupe (503) pendant lesquelles les dispositifs terminaux dudit groupe peuvent écouter le medium de communication sans-fil pour déterminer si leur trame ascendante est acquittée dans un acquittement de groupe, les instances d'une fenêtre de réception de groupe (503) étant séparées par une période P de durée prédéterminée connue du serveur et de chaque dispositif terminal dudit groupe, de sorte que les instances de fenêtres de réception de groupe (503) surviennent à des instants déterministes ;
- lorsque ledit dispositif terminal (110, 112) est affecté à un groupe, recevoir (612a, 612b) en mode point-à-multipoint des trames descendantes incluant des acquittements via la passerelle agissant comme relais desdites trames ascendantes pendant les instances de la fenêtre de réception de groupe (503), chaque trame descendante incluant un acquittement de groupe pour toutes les trames ascendantes émises par des dispositifs terminaux (110, 112) du groupe pendant la période P précédant ladite instance de la fenêtre de réception de groupe (503) ; et
- lorsque ledit dispositif terminal (111) n'est pas affecté à un groupe, recevoir (606, 618) en mode point-à-point via la passerelle agissant comme relais des trames descendantes incluant des acquittements desdites trames ascendantes.

10. Procédé selon la revendication 9, **caractérisé en ce que** le procédé comporte les étapes suivantes :
- recevoir (602) du serveur (130) un message d'abonnement par lequel le serveur (130) indique audit dispositif terminal (110, 112) que ledit dispositif terminal (110, 112) a été associé audit groupe, le message d'abonnement incluant une information d'index indiquant à quel index est associé ledit dispositif terminal (110, 112) au sein dudit groupe, l'index associant audit dispositif terminal (110, 112) une position de bit dans un champ (ACK) des acquittements de groupe ; et
- sur réception (612a, 612b) d'un acquittement de groupe, déterminer si la trame ascendante précédemment transmise par ledit dispositif terminal est acquittée, en vérifiant la valeur à ladite position de bit dans le champ (ACK) des acquittements de groupe.

11. Procédé selon la revendication 9, **caractérisé en ce que** le procédé comporte l'étape suivante :
- recevoir (602) du serveur (130) un message d'abonnement par lequel le serveur (130) indique audit dispositif terminal (110, 112) que ledit dispositif terminal (110, 112) a été associé audit groupe,
**en ce qu'**un index est implicitement associé audit dispositif terminal (110, 112) au sein dudit groupe, l'index associant audit dispositif terminal (110, 112) une position de bit dans un champ (ACK) des acquittements de groupe, l'index étant de valeur égale à la valeur de Ng_b > 0 bits de poids faible parmi Nd bits utilisés pour représenter une adresse attribuée audit dispositif terminal (110, 112) pour communiquer dans le système de communication, avec Nd > Ng_b,
et **en ce que** le procédé comporte en outre l'étape suivante :
- sur réception (612a, 612b) d'un acquittement de groupe, déterminer si la trame ascendante précédemment transmise par ledit dispositif terminal est acquittée, en vérifiant la valeur à ladite position de bit dans le champ (ACK) des acquittements de groupe.

12. Procédé selon l'une quelconque des revendications 10 et 11, **caractérisé en ce que** le message d'abonnement inclut un champ de référence temporelle (NW) représentatif d'un instant auquel démarre, pour ledit groupe, la prochaine instance de la fenêtre de réception de groupe (503), et ledit dispositif terminal (110, 112) programme une écoute du medium de communication sans-fil en fonction du champ de référence temporelle.

13. Procédé selon la revendication 12, **caractérisé en ce que** le champ de référence temporelle (NW) inclut en outre une information complémentaire représentative d'une durée de la période P séparant les instances de fenêtre de réception de groupe (503) pour ledit groupe.

14. Procédé selon la revendication 13, **caractérisé en ce que** le champ de référence temporelle (NW) inclut en outre une information de variabilité de la période P séparant les instances de fenêtre de réception de groupe (503) pour ledit groupe.

15. Procédé selon la revendication 14, **caractérisé en ce que** la durée de la période P est variable selon une séquence prédéfinie de durées, et le champ de référence temporelle indique en outre où en est le groupe dans ladite séquence prédéfinie de durées, la séquence prédéfinie de durées étant alors connue à l'avance par le dispositif terminal (110, 112) ou incluse dans le message d'abonnement.

16. Procédé selon l'une quelconque des revendications 9 à 15, **caractérisé en ce que** l'acquittement de groupe inclut un champ de synchronisation temporelle (TS) fournissant un temps relatif correspondant à l'instant auquel survient la prochaine instance de la fenêtre de réception de groupe (503) pour ledit groupe, et le procédé comporte en outre les étapes suivantes :
- lorsque ledit dispositif terminal détecte (802), s'il y a un risque qu'une horloge interne dudit dispositif terminal ait trop dérivé par rapport au reste du système de communication et/ou par rapport à un seuil prédéfini, programmer (803) une écoute du medium de communication sans-fil pendant une instance de fenêtre de réception de groupe (503) pour ledit groupe, indépendamment de toute transmission ascendante par ledit dispositif terminal (110, 112) ; et
- resynchroniser l'horloge interne dudit dispositif terminal grâce à une détermination d'un décalage entre un instant effectif de transmission, ou de réception, d'un acquittement de groupe reçu pendant l'instance de fenêtre de réception de groupe (503) ainsi programmée et un instant précédemment estimé de transmission, ou de réception, dudit acquittement de groupe.

17. Procédé de transmission et de réception d'acquittements dans un système de communication comportant un serveur (130), une pluralité de dispositifs terminaux (110, 111, 112), et au moins une passerelle de collecte (120, 121, 122, 123) servant de relais entre le serveur (130) et les dispositifs terminaux (110, 111, 112), **caractérisé en ce que** le serveur (130) implémente le procédé selon l'une des revendications 1 à 8 et plusieurs dispositifs terminaux (110, 111, 112) implémentent le procédé selon l'une des revendications 9 à 16.

18. Programme d'ordinateur comportant un ensemble d'instructions causant l'exécution, par un processeur (201), du procédé selon l'une quelconque des revendications 1 à 8 ou le procédé selon l'une quelconque des revendications 9 à 16, lorsque ledit programme d'ordinateur est exécuté par ledit processeur.

19. Support de stockage d'informations stockant un programme d'ordinateur comportant un ensemble d'instructions causant l'exécution, par un processeur (201), du procédé selon l'une quelconque des revendications 1 à 8 ou le procédé selon l'une quelconque des revendications 9 à 16, lorsque ledit programme d'ordinateur est exécuté par ledit processeur.

20. Serveur (130) destiné à être inclus dans un système de communication comportant en outre une pluralité de dispositifs terminaux (110, 111, 112) et au moins une passerelle de collecte (120, 121, 122, 123) servant de relais entre le serveur (130) et les dispositifs terminaux (110, 111, 112), chaque dispositif terminal (110, 111, 112) communiquant avec au moins une dite passerelle de collecte (120, 121, 122, 123) via un medium de communication sans-fil, le serveur (130) comportant :
- des moyens pour créer au moins un groupe et affecter (601) des dispositifs terminaux à chaque groupe créé ;
- des moyens pour définir, pour chaque groupe créé, des instances d'une fenêtre de réception de groupe (503) pendant lesquelles les dispositifs terminaux dudit groupe peuvent écouter le medium de communication sans-fil pour déterminer si leur trame ascendante est acquittée dans un acquittement de groupe, les instances d'une fenêtre de réception de groupe (503) étant séparées par une période P de durée prédéterminée connue du serveur et de chaque dispositif terminal dudit groupe, de sorte que les instances de fenêtres de réception de groupe (503) surviennent à des instants déterministes ;
- des moyens pour recevoir (608, 610) des trames ascendantes en provenance des dispositifs terminaux (110, 111, 112) ;
- pour un dit dispositif terminal (110, 112) affecté à un groupe, des moyens pour acquitter (611) via la passerelle agissant comme relais les trames ascendantes reçues dans une trame descendante transmise en mode point-à-multipoint (612a, 612b) dans une dite instance de la fenêtre de réception de groupe (503) définie pour ledit groupe, ladite trame descendante incluant un acquittement de groupe pour toutes les trames ascendantes (ULF) émises par des dispositifs terminaux (110, 112) du groupe pendant la période P précédant ladite instance de la fenêtre de réception de groupe (503) ; et
- pour un dit dispositif terminal (111) qui n'est pas affecté à un groupe, des moyens pour acquitter (605, 617) via la passerelle agissant comme relais les trames ascendantes reçues en mode point-à-point.

21. Dispositif terminal (110) destiné à être inclus dans un système de communication comportant un serveur (130), au moins un autre dispositif terminal (111, 112), et au moins une passerelle de collecte (120, 121, 122, 123) servant de relais entre le serveur (130) et les dispositifs terminaux (110, 111, 112), le dispositif terminal revendiqué (110) communiquant avec au moins une dite passerelle de collecte (120, 121, 122) via un medium de communication sans-fil, le dispositif terminal revendiqué (110) comportant :
- des moyens pour transmettre (607) des trames ascendantes à destination du serveur (130) ;
- lorsque le dispositif terminal revendiqué (110) a reçu du serveur un message d'affectation du dispositif terminal revendiqué (110) à un groupe, des moyens pour programmer (704) une écoute du medium de communication sans-fil pendant des instances d'une fenêtre de réception de groupe (503) pendant lesquelles les dispositifs terminaux dudit groupe peuvent écouter le medium de communication sans-fil pour déterminer si leur trame ascendante est acquittée dans un acquittement de groupe, les instances d'une fenêtre de réception de groupe (503) étant séparées par une période P de durée prédéterminée connue du serveur et de chaque dispositif terminal dudit groupe, de sorte que les instances de fenêtres de réception de groupe (503) surviennent à des instants déterministes ;
- lorsque le dispositif terminal revendiqué (110) est affecté à un groupe, des moyens pour recevoir via la passerelle agissant comme relais en mode point-à-multipoint (612b) des trames descendantes incluant des acquittements desdites trames ascendantes pendant les instances de la fenêtre de réception de groupe (503), chaque trame descendante incluant un acquittement de groupe pour toutes les trames ascendantes émises (607, 609) par des dispositifs terminaux (110, 112) du groupe pendant la période P précédant ladite instance de la fenêtre de réception de groupe (503) ; et
- lorsque le dispositif terminal revendiqué n'est pas affecté à un groupe, des moyens pour recevoir via la passerelle agissant comme relais en mode point-à-point des trames descendantes incluant des acquittements desdites trames ascendantes.

22. Système de communication comportant un serveur (130), une pluralité de dispositifs terminaux (110, 111, 112), et au moins une passerelle de collecte (120, 121, 122, 123) servant de relais entre le serveur (130) et les dispositifs terminaux (110, 111, 112), **caractérisé en ce que** le serveur est selon la revendication 20 et plusieurs dispositifs terminaux (110, 111, 112) sont selon la revendication 21.

## Patentansprüche

1. Verfahren zur Übertragung von Bestätigungen in einem Kommunikationssystem, das einen Server (130), eine Vielzahl von Endgeräten (110, 111, 112) und mindestens ein Sammel-Gateway (120, 121, 122, 123) aufweist, das als Relais zwischen dem Server (130) und den Endgeräten (110, 111, 112) dient, wobei jedes Endgerät (110, 111, 112) über ein drahtloses Kommunikationsmedium mit mindestens einem Sammel-Gateway (120, 121, 122, 123) kommuniziert, wobei das Verfahren vom Server (130) implementiert wird, wobei das Verfahren die folgenden Schritte aufweist:
- Erzeugen mindestens einer Gruppe und Zuweisen (601) von Endgeräten (110, 112) zu jeder erzeugten Gruppe;
- Definieren, für jede erzeugte Gruppe, von Instanzen eines Gruppenempfangsfensters (503), während denen die Endgeräte der Gruppe das drahtlose Kommunikationsmedium abhören können, um zu bestimmen, ob ihr Aufwärtsrahmen in einer Gruppenbestätigung bestätigt wird, wobei die Instanzen eines Gruppenempfangsfensters (503) durch eine dem Server und jedem Endgerät der Gruppe bekannte Periode P vorbestimmter Dauer getrennt sind, so dass die Instanzen von Gruppenempfangsfenstern (503) zu deterministischen Zeitpunkten auftreten;
- Empfangen (608, 610) von Aufwärtsrahmen von den Endgeräten (110, 111, 112);
- für ein einer Gruppe zugewiesenes Endgerät (110), Bestätigen über das als Relais fungierende Gateway der Aufwärtsrahmen, die in einem im Punkt-zu-Mehrpunkt-Modus (612a, 612b) übertragenen Abwärtsrahmen (611) in einer Instanz des für die Gruppe definierten Gruppenempfangsfensters (503) empfangen werden, wobei der Abwärtsrahmen eine Gruppenbestätigung für alle Aufwärtsrahmen (ULF) enthält, die von Endgeräten (110, 112) der Gruppe während der Periode P gesendet werden, die der Instanz des Gruppenempfangsfensters (503) vorausgeht; und
- für ein Endgerät (111), das keiner Gruppe zugewiesen ist, Bestätigen (605, 617) über das als Relais fungierende Gateway der im Punkt-zu-Punkt-Modus empfangenen Aufwärtsrahmen.

2. Verfahren nach Anspruch 1, **dadurch gekennzeichnet, dass** der Server (130), indem er ein Endgerät (110, 112) einer Gruppe zuweist, an das Endgerät (110, 112) eine Abonnementnachricht überträgt (601), durch die der Server (130) dem Endgerät (110, 112) anzeigt, dass das Endgerät (110, 112) der Gruppe zugeordnet worden ist, wobei die Abonnementnachricht eine Indexinformation (IND) enthält, die anzeigt, welchem Index das Endgerät (110, 112) innerhalb der Gruppe zugeordnet ist, wobei der Index dem Endgerät (110, 112) eine Bitposition in einem Feld (ACK) der Gruppenbestätigungen zuordnet.

3. Verfahren nach Anspruch 1, **dadurch gekennzeichnet, dass** der Server (130) an das Endgerät (110, 112) eine Abonnementnachricht überträgt (601), durch die der Server (130) dem Endgerät (110, 112) anzeigt, dass das Endgerät (110, 112) der Gruppe zugeordnet worden ist, und dass ein Index dem Endgerät (110, 112) innerhalb der Gruppe implizit zugeordnet wird, wobei der Index dem Endgerät (110, 112) eine Bitposition in einem Feld (ACK) der Gruppenbestätigungen zuordnet, wobei der Index einen Wert gleich dem Wert von Ng_b > 0 niederwertigen Bits unter Nd Bits hat, die verwendet werden, um eine dem Endgerät (110, 112) zugewiesene Adresse darzustellen, um im Kommunikationssystem zu kommunizieren, mit Nd > Ng_b.

4. Verfahren nach einem der Ansprüche 2 und 3, **dadurch gekennzeichnet, dass** die Abonnementnachricht ein Zeitreferenzfeld (NW) enthält, das für einen Zeitpunkt repräsentativ ist, zu dem die nächste Instanz des Gruppenempfangsfensters (503) für die Gruppe startet.

5. Verfahren nach Anspruch 4, **dadurch gekennzeichnet, dass** das Zeitreferenzfeld (NW) außerdem eine komplementäre Information enthält, die für eine Dauer der Periode P repräsentativ ist, die die Gruppenempfangsfenster-Instanzen (503) für die Gruppe trennt.

6. Verfahren nach Anspruch 5, **dadurch gekennzeichnet, dass** das Zeitreferenzfeld (NW) außerdem eine Variabilitätsinformation der Periode P enthält, die die Gruppenempfangsfenster-Instanzen (503) für die Gruppe trennt.

7. Verfahren nach Anspruch 6, **dadurch gekennzeichnet, dass** die Dauer der Periode P gemäß einer vordefinierten Folge von Dauern variabel ist, und das Zeitreferenzfeld (NW) eine Information enthält, die anzeigt, wie der Status der Gruppe in der vordefinierten Folge von Dauern ist, wobei die vordefinierte Folge von Dauern dann den Endgeräten (110, 112) im Voraus bekannt oder in der Abonnementnachricht enthalten ist.

8. Verfahren nach einem der Ansprüche 1 bis 7, **dadurch gekennzeichnet, dass** die Gruppenbestätigung ein Zeitsynchronisationsfeld (TS) enthält, das eine relative Zeit entsprechend dem Zeitpunkt liefert, zu dem die nächste Instanz des Gruppenempfangsfensters (503) für die Gruppe auftritt.

9. Verfahren zum Empfang von Bestätigungen in einem Kommunikationssystem, das einen Server (130), eine Vielzahl von Endgeräten (110, 111, 112) und mindestens ein Sammel-Gateway (120, 121, 122, 123) aufweist, das als Relais zwischen dem Server (130) und den Endgeräten (110, 111, 112) dient, wobei jedes Endgerät (110, 111, 112) über ein drahtloses Kommunikationsmedium mit mindestens einem Sammel-Gateway (120, 121, 122, 123) kommuniziert, wobei das Verfahren von jedem Endgerät (110, 111, 112) implementiert wird, wobei das Verfahren die folgenden Schritte aufweist:
- Übertragen (607, 609) von Aufwärtsrahmen an den Server (130);
- wenn das Endgerät (110, 112) vom Server (130) eine Zuweisungsnachricht des Endgeräts (110, 112) zu einer Gruppe empfangen hat, Programmieren (704) eines Abhörens des drahtlosen Kommunikationsmediums während Instanzen eines Gruppenempfangsfensters (503), während denen die Endgeräte der Gruppe das drahtlose Kommunikationsmedium abhören können, um zu bestimmen, ob ihr Aufwärtsrahmen in einer Gruppenbestätigung bestätigt wird, wobei die Instanzen eines Gruppenempfangsfensters (503) durch eine dem Server und jedem Endgerät der Gruppe bekannte Periode P vorbestimmter Dauer getrennt sind, so dass die Gruppenempfangsfenster-Instanzen (503) zu deterministischen Zeitpunkten auftreten;
- wenn das Endgerät (110, 112) einer Gruppe zugewiesen ist, Empfangen (612a, 612b) im Punkt-zu-Mehrpunkt-Modus von Bestätigungen der Aufwärtsrahmen enthaltenden Abwärtsrahmen über das als Relais fungierende Gateway während der Instanzen des Gruppenempfangsfensters (503), wobei jeder Abwärtsrahmen eine Gruppenbestätigung für alle Aufwärtsrahmen enthält, die von Endgeräten (110, 112) der Gruppe während der der Gruppenempfangsfenster-Instanz (503) vorausgehenden Periode P gesendet werden; und
- wenn das Endgerät (111) keiner Gruppe zugewiesen ist, Empfangen (606, 618) im Punkt-zu-Punkt-Modus über das als Relais fungierende Gateway von Bestätigungen der Aufwärtsrahmen enthaltenden Abwärtsrahmen.

10. Verfahren nach Anspruch 9, **dadurch gekennzeichnet, dass** das Verfahren die folgenden Schritte aufweist:
- Empfangen (602) vom Server (130) einer Abonnementnachricht, durch die der Server (130) dem Endgerät (110, 112) anzeigt, dass das Endgerät (110, 112) der Gruppe zugeordnet worden ist, wobei die Abonnementnachricht eine Indexinformation enthält, die anzeigt, welchem Index das Endgerät (110, 112) innerhalb der Gruppe zugeordnet ist, wobei der Index dem Endgerät (110, 112) eine Bitposition in einem Feld (ACK) der Gruppenbestätigungen zuordnet; und
- bei Empfang (612a, 612b) einer Gruppenbestätigung, Bestimmen, ob der vorher vom Endgerät übertragene Aufwärtsrahmen bestätigt wird, durch Überprüfen des Werts an der Bitposition im Feld (ACK) der Gruppenbestätigungen.

11. Verfahren nach Anspruch 9, **dadurch gekennzeichnet, dass** das Verfahren den folgenden Schritt aufweist:
- Empfangen (602) vom Server (130) einer Abonnementnachricht, durch die der Server (130) dem Endgerät (110, 112) anzeigt, dass das Endgerät (110, 112) der Gruppe zugeordnet worden ist,
dass ein Index dem Endgerät (110, 112) innerhalb der Gruppe implizit zugeordnet wird, wobei der Index dem Endgerät (110, 112) eine Bitposition in einem Feld (ACK) der Gruppenbestätigungen zuordnet, wobei der Index einen Wert gleich dem Wert von Ng_b > 0 niederwertigen Bits unter Nd Bits hat, die verwendet werden, um eine dem Endgerät (110, 112) zugewiesene Adresse darzustellen, um im Kommunikationssystem zu kommunizieren, mit Nd > Ng_b,
und dass das Verfahren außerdem den folgenden Schritt aufweist:
- bei Empfang (612a, 612b) einer Gruppenbestätigung, Bestimmen, ob der vorher vom Endgerät übertragene Aufwärtsrahmen bestätigt wird, durch Überprüfen des Werts an der Bitposition im Feld (ACK) der Gruppenbestätigungen.

12. Verfahren nach einem der Ansprüche 10 und 11, **dadurch gekennzeichnet, dass** die Abonnementnachricht ein Zeitreferenzfeld (NW) enthält, das für einen Zeitpunkt repräsentativ ist, zu dem die nächste Instanz des Gruppenempfangsfensters (503) für die Gruppe startet, und das Endgerät (110, 112) ein Abhören des drahtlosen Kommunikationsmediums abhängig vom Zeitreferenzfeld programmiert.

13. Verfahren nach Anspruch 12, **dadurch gekennzeichnet, dass** das Zeitreferenzfeld (NW) außerdem eine komplementäre Information enthält, die für eine Dauer der Periode P repräsentativ ist, die die Gruppenempfangsfenster-Instanzen (503) für die Gruppe trennt.

14. Verfahren nach Anspruch 13, **dadurch gekennzeichnet, dass** das Zeitreferenzfeld (NW) außerdem eine Variabilitätsinformation der Periode P enthält, die die Gruppenempfangsfenster-Instanzen (503) für die Gruppe trennt.

15. Verfahren nach Anspruch 14, **dadurch gekennzeichnet, dass** die Dauer der Periode P gemäß einer vordefinierten Folge von Dauern variabel ist, und das Zeitreferenzfeld außerdem anzeigt, wie der Status der Gruppe in der vordefinierten Folge von Dauern ist, wobei die vordefinierte Folge von Dauern dann dem Endgerät (110, 112) im Voraus bekannt oder in der Abonnementnachricht enthalten ist.

16. Verfahren nach einem der Ansprüche 9 bis 15, **dadurch gekennzeichnet, dass** die Gruppenbestätigung ein Zeitsynchronisationsfeld (TS) enthält, das eine relative Zeit liefert, die dem Zeitpunkt entspricht, zu dem die nächste Instanz des Gruppenempfangsfensters (503) für die Gruppe auftritt, und das Verfahren außerdem die folgenden Schritte aufweist:
- wenn das Endgerät erfasst (802), dass eine Gefahr besteht, dass ein interner Zeitgeber des Endgeräts in Bezug auf das restliche Kommunikationssystem und/oder in Bezug auf eine vordefinierte Schwelle zu sehr abgewichen ist, Programmieren (803) eines Abhörens des drahtlosen Kommunikationsmediums während einer Gruppenempfangsfenster-Instanz (503) für die Gruppe, unabhängig von jeder Aufwärtsübertragung durch das Endgerät (110, 112); und
- Resynchronisieren des internen Zeitgebers des Endgeräts mittels einer Bestimmung einer Verschiebung zwischen einem tatsächlichen Übertragungs- oder Empfangszeitpunkt einer Gruppenbestätigung, die während der so programmierten Gruppenempfangsfenster-Instanz (503) empfangen wird, und einem vorher geschätzten Übertragungs- oder Empfangszeitpunkt der Gruppenbestätigung.

17. Verfahren zur Übertragung und zum Empfang von Bestätigungen in einem Kommunikationssystem, das einen Server (130), eine Vielzahl von Endgeräten (110, 111, 112) und mindestens ein Sammel-Gateway (120, 121, 122, 123) aufweist, das als Relais zwischen dem Server (130) und den Endgeräten (110, 111, 112) dient, **dadurch gekennzeichnet, dass** der Server (130) das Verfahren nach einem der Ansprüche 1 bis 8 implementiert und mehrere Endgeräte (110, 111, 112) das Verfahren nach einem der Ansprüche 9 bis 16 implementieren.

18. Computerprogramm, das eine Einheit von Anweisungen aufweist, die die Ausführung, durch einen Prozessor (201), des Verfahrens nach einem der Ansprüche 1 bis 8 oder das Verfahren nach einem der Ansprüche 9 bis 16 verursacht, wenn das Computerprogramm vom Prozessor ausgeführt wird.

19. Informationsspeicherträger, der ein Computerprogramm speichert, das eine Einheit von Anweisungen aufweist, die die Ausführung, durch einen Prozessor (201), des Verfahrens nach einem der Ansprüche 1 bis 8 oder das Verfahren nach einem der Ansprüche 9 bis 16 verursacht, wenn das Computerprogramm vom Prozessor ausgeführt wird.

20. Server (130), der dazu bestimmt ist, in einem Kommunikationssystem enthalten zu sein, das außerdem eine Vielzahl von Endgeräten (110, 111, 112) und mindestens ein Sammel-Gateway (120, 121, 122, 123) aufweist, das als Relais zwischen dem Server (130) und den Endgeräten (110, 111, 112) dient, wobei jedes Endgerät (110, 111, 112) über ein drahtloses Kommunikationsmedium mit mindestens einem Sammel-Gateway (120, 121, 122, 123) kommuniziert, wobei der Server (130) aufweist:
- Einrichtungen, um mindestens eine Gruppe zu erzeugen und jeder erzeugten Gruppe Endgeräte zuzuweisen (601);
- Einrichtungen, um für jede erzeugte Gruppe Instanzen eines Gruppenempfangsfensters (503) zu definieren, während denen die Endgeräte der Gruppe das drahtlose Kommunikationsmedium abhören können, um zu bestimmen, ob ihr Aufwärtsrahmen in einer Gruppenbestätigung bestätigt wird, wobei die Instanzen eines Gruppenempfangsfensters (503) durch eine Periode P vorbestimmter Dauer getrennt sind, die dem Server und jedem Endgerät der Gruppe bekannt ist, so dass die Gruppenempfangsfenster-Instanzen (503) zu deterministischen Zeitpunkten auftreten;
- Einrichtungen, um von den Endgeräten (110, 111, 112) kommende Aufwärtsrahmen zu empfangen (608, 610);
- für ein einer Gruppe zugewiesenes Endgerät (110, 112), Einrichtungen, um über das als Relais fungierende Gateway die Aufwärtsrahmen zu bestätigen (611), die in einem Abwärtsrahmen empfangen werden, der im Punkt-zu-Mehrpunkt-Modus (612a, 612b) in einer für die Gruppe definierten Instanz des Gruppenempfangsfensters (503) übertragen wird, wobei der Abwärtsrahmen eine Gruppenbestätigung für alle von Endgeräten (110, 112) der Gruppe während der der Instanz des Gruppenempfangsfensters (503) vorausgehenden Periode P gesendeten Aufwärtsrahmen (ULF) enthält; und
- für ein Endgerät (111), das keiner Gruppe zugewiesen ist, Einrichtungen, um über das als Relais fungierende Gateway die im Punkt-zu-Punkt-Modus empfangenen Aufwärtsrahmen zu bestätigen (605, 617).

21. Endgerät (110), das dazu bestimmt ist, in einem Kommunikationssystem enthalten zu sein, das einen Server (130), mindestens ein weiteres Endgerät (111, 112) und mindestens ein Sammel-Gateway (120, 121, 122, 123) enthält, das als Relais zwischen dem Server (130) und den Endgeräten (110, 111, 112) dient, wobei das beanspruchte Endgerät (110) über ein drahtloses Kommunikationsmedium mit mindestens einem Sammel-Gateway (120, 121, 122) kommuniziert, wobei das beanspruchte Endgerät (110) aufweist:
- Einrichtungen, um Aufwärtsrahmen an den Server (130) zu übertragen (607);
- wenn das beanspruchte Endgerät (110) vom Server eine Zuweisungsnachricht des beanspruchten Endgeräts (110) zu einer Gruppe empfangen hat, Einrichtungen, um ein Abhören des drahtlosen Kommunikationsmediums während Instanzen eines Gruppenempfangsfensters (503) zu programmieren (704), während denen die Endgeräte der Gruppe das drahtlose Kommunikationsmedium abhören können, um zu bestimmen, ob ihr Aufwärtsrahmen in einer Gruppenbestätigung bestätigt wird, wobei die Instanzen eines Gruppenempfangsfensters (503) durch eine dem Server und jedem Endgerät der Gruppe bekannte Periode P vorbestimmter Dauer getrennt sind, so dass die Gruppenempfangsfenster-Instanzen (503) zu deterministischen Zeitpunkten auftreten;
- wenn das beanspruchte Endgerät (110) einer Gruppe zugewiesen ist, Einrichtungen, um über das als Relais fungierende Gateway im Punkt-zu-Mehrpunkt-Modus (612b) Abwärtsrahmen zu empfangen, die Bestätigungen der Aufwärtsrahmen während der Instanzen des Gruppenempfangsfensters (503) enthalten, wobei jeder Abwärtsrahmen eine Gruppenbestätigung für alle von Endgeräten (110, 112) der Gruppe während der der Instanz des Gruppenempfangsfensters (503) vorausgehenden Periode P gesendeten (607, 609) Aufwärtsrahmen enthält; und
- wenn das beanspruchte Endgerät keiner Gruppe zugewiesen ist, Einrichtungen, um über das als Relais fungierende Gateway im Punkt-zu-Punkt-Modus Bestätigungen der Aufwärtsrahmen enthaltende Abwärtsrahmen zu empfangen.

22. Kommunikationssystem, das einen Server (130), eine Vielzahl von Endgeräten (110, 111, 112) und mindestens ein Sammel-Gateway (120, 121, 122, 123) aufweist, das als Relais zwischen dem Server (130) und den Endgeräten (110, 111, 112) dient, **dadurch gekennzeichnet, dass** der Server nach Anspruch 20 ist und mehrere Endgeräte (110, 111, 112) nach Anspruch 21 sind.

## Claims

1. Method for transmitting acknowledgements in a communication system comprising a server (130), a plurality of end devices (110, 111, 112), and at least one gathering gateway (120, 121, 122, 123) serving as a relay between the server (130) and the end devices (110, 111, 112), each end device (110, 111, 112) communicating with at least one said gathering gateway (120, 121, 122, 123) via a wireless communication medium, the method being implemented by the server (130), the method comprising the following steps:
- creating at least one group and allocating (601) end devices (110, 112) to each group created;
- defining, for each group created, instances of a group reception window (503) during which the end devices of said group can listen out on the wireless communication medium in order to determine whether their uplink frame is acknowledged in a group acknowledgement, the instances of a group reception window (503) being separated by a period P of predetermined duration known to the server and to each end device of said group, so that the instances of group reception windows (503) occur at deterministic instants;
- receiving (608, 610) uplink frames coming from the end devices (110, 111, 112) ;
- for a said end device (110) allocated to a group, acknowledging, via the gateway acting as relay, the uplink frames received in a downlink frame (611) transmitted in multicast mode (612a, 612b) in a said instance of the group reception window (503) defined for said group, said downlink frame including a group acknowledgement for all the uplink frames (ULF) sent by end devices (110, 112) in the group during the period P preceding said instance of the group reception window (503); and,
- for a said end device (111) that is not allocated to a group, acknowledging (605, 617 , via the gateway acting as relay, the uplink frames received in unicast mode.

2. Method according to claim 1, **characterised in that**, in allocating a said end device (110, 112) to a group, the server (130) transmits (601) to said end device (110, 112) a subscription message by means of which the server (130) indicates to said end device (110, 112) that said end device (110, 112) has been associated with said group, the subscription message including index information (IND) indicating with which index said end device (110, 112) is associated in said group, the index associating with said end device (110, 112) a bit position in a field (ACK) of the group acknowledgements.

3. Method according to claim 1, **characterised in that** the server (130) transmits (601) to said end device (110, 112) a subscription message by means of which the server (130) indicates to said end device (110, 112) that said end device (110, 112) has been associated with said group, and **in that** an index is implicitly associated with said end device (110, 112) in said group, the index associating with said end device (110, 112) a bit position in a field (ACK) of the group acknowledgements, the index having a value equal to the value of Ng_b > 0 least significant bits among Nd bits used for representing an address attributed to said end device (110, 112) for communicating in the communication system, via the gateway acting as relay.

4. Method according to either of claims 2 and 3, **characterised in that** the subscription message includes a time reference field (NW) representing an instant at which, for said group, the next instance of the group reception window (503) starts.

5. Method according to claim 4, **characterised in that** the time reference field (NW) further includes supplementary information representing a duration of the period P separating the instances of a group reception window (503) for said group.

6. Method according to claim 5, **characterised in that** the time reference field (NW) further includes information on variability of the period P separating the instances of a group reception window (503) for said group.

7. Method according to claim 6, **characterised in that** the duration of the period P is variable according to a predefined sequence of durations, and the time reference field (NW) includes information indicating where the group is in said predefined sequence of durations, the predefined sequence of durations then being known in advance to the end devices (110, 112) or included in the subscription message.

8. Method according to any one of claims 1 to 7, **characterised in that** the group acknowledgement includes a time synchronisation field (TS) supplying a relative time corresponding to the instant at which the next instance of the group reception window (503) occurs for said group.

9. Method for receiving acknowledgements in a communication system comprising a server (130), a plurality of end devices (110, 111, 112), and at least one gathering gateway (120, 121, 122, 123) serving as a relay between the server (130) and the end devices (110, 111, 112), each end device (110, 111, 112) communicating with at least one said gathering gateway (120, 121, 122, 123) via a wireless communication medium, the method being implemented by each end device (110, 111, 112), **characterised in that** the method comprises the following steps:
- transmitting (607, 609) uplink frames to the server (130);
- when said end device (110, 112) has received from the server (130) a message allocating the end device (110, 112) to a group, programming (704) a listening on the wireless communication medium during instances of a group reception window (503) during which the end devices of said group can listen out on the wireless communication medium in order to determine whether their uplink frame is acknowledged in a group acknowledgement, the instances of a group reception window (503) being separated by a period P of predetermined duration known to the server and to each end device of said group, so that the instances of group reception window (503) occur at deterministic instants;
- when said end device (110, 112) is allocated to a group, receiving (612a, 612b) in multicast mode downlink frames including acknowledgements, via the gateway acting as relay, of said uplink frames during the instances of the group reception window (503), each downlink frame including a group acknowledgement for all the uplink frames sent by end devices (110, 112) in the group during a period P preceding said instance of the group reception window (503); and,
- when said end device (111) is not allocated to a group, receiving (606, 618) in unicast mode, via the gateway acting as relay, downlink frames including acknowledgements of said uplink frames.

10. Method according to claim 9, **characterised in that** the method comprises the following steps:
- receiving (602) from the server (130) a subscription message by means of which the server (130) indicates to said end device (110, 112) that said end device (110, 112) has been associated with said group, the subscription message including index information indicating with which index said end device (110, 112) is associated in said group, the index associating with said end device (110, 112) a bit position in a field (ACK) of the group acknowledgements; and,
- on reception (612a, 612b) of a group acknowledgement, determining whether the uplink frame previously transmitted by said end device is acknowledged, by checking the value at said bit position in the field (ACK) of the group acknowledgements.

11. Method according to claim 9, **characterised in that** the method comprises the following step:
- receiving (602) from the server (130) a subscription message by means of which the server (130) indicates to said end device (110, 112) that said end device (110, 112) has been associated with said group,
**in that** an index is implicitly associated with said end device (110, 112) in said group, the index associating with said end device (110, 112) a bit position in a field (ACK) of the group acknowledgements, the index having a value equal to the value of Ng_b > 0 least significant bits among Nd bits used for representing an address attributed to said end device (110, 112) for communicating in the communication system, via the gateway acting as relay,
and **in that** the method further comprises the following step:
- on reception (612a, 612b) of a group acknowledgement, determining whether the uplink frame previously transmitted by said end device is acknowledged, checking the value at said bit position in the field (ACK) of the group acknowledgements.

12. Method according to either one of claims 10 and 11, **characterised in that** the subscription message includes a time reference field (NW) representing an instant at which, for said group, the next instance of the group reception window (503) starts, and said end device (110, 112) programs a listening on the wireless communication medium according to the time reference field.

13. Method according to claim 12, **characterised in that** the time reference field (NW) further includes supplementary information representing a duration of the period P separating the instances of a group reception window (503) for said group.

14. Method according to claim 13, **characterised in that** the time reference field (NW) further includes information on variability of the period P separating the instances of a group reception window (503) for said group.

15. Method according to claim 14, **characterised in that** the duration of the period P is variable according to a predefined sequence of durations, and the time reference field further indicates where the group is in said predefined sequence of durations, the predefined sequence of durations then being known in advance to the end device (110, 112) or included in the subscription message.

16. Method according to any one of claims 9 to 15, **characterised in that** the group acknowledgement includes a time synchronisation field (TS) supplying a relative time corresponding to the instant at which the next instance of the group reception window (503) occurs for said group, and the method further comprises the following steps:
- when said end device detects (802) whether there is a risk of an internal clock of said end device having drifted excessively with respect to the rest of the communication system and/or with respect to a predefined threshold, programming (803) a listening on the wireless communication medium during an instance of a group reception window (503) for said group, independently of any uplink transmission by said end device (110, 112); and
- resynchronising the internal clock of said end device by means of a determination of an offset between an actual instant of transmission, or of reception, of a group acknowledgement received during the instance of a group reception window (503) thus programmed and a previously estimated instant of transmission, or of reception, of said group acknowledgement.

17. Method for transmitting and receiving acknowledgements in a communication system comprising a server (130), a plurality of end devices (110, 111, 112), and at least one gathering gateway (120, 121, 122, 123) serving as relays between the server (130) and the end devices (110, 111, 112), **characterised in that** the server (130) implements the method according to one of claims 1 to 8 and a plurality of end devices (110, 111, 112) implement the method according to one of claims 9 to 16.

18. Computer program comprising a set of instructions causing the execution, by a processor (201), of the method according to any one of claims 1 to 8 or the method according to any of claims 9 to 16, when said computer program is executed by said processor.

19. Information storage medium storing a computer program comprising a set of instructions causing the execution, by a processor (201), of the method according to any one of claims 1 to 8 or the method according to any one of claims 9 to 16, when said computer program is executed by said processor.

20. Server (130) intended to be included in a communication system further comprising a plurality of end devices (110, 111, 112) and at least one gathering gateway (120, 121, 122, 123) serving as a relay between the server (130) and the end devices (110, 111, 112), each end device (110, 111, 112) communicating with at least one said gathering gateway (120, 121, 122, 123) via a wireless communication medium, the server (130) comprising:
- means for creating at least one group and allocating (601) end devices to each group created;
- means for defining, for each group created, instances of a group reception window (503) during which the end devices of said group can listen out on the wireless communication medium in order to determine whether their uplink frame is acknowledged in a group acknowledgement, the instances of a group reception window (503) being separated by a period P of predetermined duration known to the server and to each end device of said group, so that the instances of group reception windows (503) occur at deterministic instants;
- means for receiving (608, 610) uplink frames coming from the end devices (110, 111, 112) ;
- for a said end device (110, 112) allocated to a group, means for acknowledging (611), via the gateway acting as relay, the uplink frames received in a downlink frame transmitted in multicast mode (612a, 612b) in a said instance of the group reception window (503) defined for said group, said downlink frame including a group acknowledgement for all the uplink frames (ULF) sent by end devices (110, 112) in the group during the period P preceding said instance of the group reception window (503); and,
- for a said end device (111) that is not allocated to a group, means for acknowledging (605, 617), via the gateway acting as relay, the uplink frames received in unicast mode.

21. End device (110) intended to be included in a communication system comprising a server (130), at least one other end device (111, 112), and at least one gathering gateway (120, 121, 122, 123) serving as a relay between the server (130) and the end devices (110, 111, 112), the end device claimed (110) communicating with at least one said gathering gateway (120, 121, 122) via a wireless communication medium, the end device claimed (110) comprising:
- means for transmitting (607) uplink frames to the server (130);
- when the claimed end device (110) has received from the server a message allocating the claimed end device (110) to a group, means for programming (704) a listening on the wireless communication medium during instances of a group reception window (503) during which the end devices of said group can listen out on the wireless communication medium in order to determine whether their uplink frame is acknowledged in a group acknowledgement, the instances of a group reception window (503) being separated by a period P of predetermined duration known to the server and to each end device of said group, so that the instances of group reception windows (503) occur at deterministic instants;
- when the claimed end device (110) is allocated to a group, means for receiving, via the gateway acting as relay, in multicast mode (612b) downlink frames including acknowledgements of said uplink frames during the instances of the group reception window (503), each downlink frame including a group acknowledgement for all the uplink frames sent (607, 609) by end devices (110, 112) in the group during the period P preceding said instance of the group reception window (503); and,
- when the claimed end device is not allocated to a group, means for receiving, via the gateway acting as relay, in unicast mode downlink frames including acknowledgements of said uplink frames.

22. Communication system comprising a server (130), a plurality of end devices (110, 111, 112), and at least one gathering gateway (120, 121, 122, 123) serving as a relay between the server (130) and the end devices (110, 111, 112), **characterised in that** the server is in accordance with claim 20 and a plurality of end devices (110, 111, 112) are in accordance with claim 21.
